(19) Europäisches Patentamt
European Patent Office
Office européen des brevets

(11) **EP 0 869 878 B1**

(12) **EUROPÄISCHE PATENTSCHRIFT**

(45) Veröffentlichungstag und Bekanntmachung des Hinweises auf die Patenterteilung:
**28.07.1999 Patentblatt 1999/30**

(51) Int. Cl.⁶: **B60J 5/04**

(21) Anmeldenummer: **96938970.9**

(22) Anmeldetag: **07.11.1996**

(86) Internationale Anmeldenummer:
**PCT/DE96/02120**

(87) Internationale Veröffentlichungsnummer:
**WO 97/18964 (29.05.1997 Gazette 1997/23)**

(54) **FAHRZEUGTÜR BEI PKW UND LKW**

DOOR FOR A PASSENGER CAR OR TRUCK

PORTIERE POUR VEHICULE DE TOURISME OU POIDS LOURD

(84) Benannte Vertragsstaaten:
**AT DE FR GB**

(30) Priorität: **17.11.1995 DE 19543706**

(43) Veröffentlichungstag der Anmeldung:
**14.10.1998 Patentblatt 1998/42**

(73) Patentinhaber:
**Go, Giok Djien, Dr.-Ing.
65510 Idstein (DE)**

(72) Erfinder:
**Go, Giok Djien, Dr.-Ing.
65510 Idstein (DE)**

(56) Entgegenhaltungen:
**EP-A- 0 423 465          EP-A- 0 585 178
EP-A- 0 642 940          EP-A- 0 659 601
DE-A- 2 162 071          DE-A- 3 103 580
DE-A- 4 342 038          DE-C- 3 726 292
US-A- 3 819 228**

EP 0 869 878 B1

**Beschreibung**

Die Erfindung bezieht sich auf eine Fahrzeugtür gemäß dem Oberbegriff des Anspruches 1. Unter Hinzunahme der Ansprüche 2 bis 10 verkörpert sie eine entscheidende Erhöhung und Sicherung des Insassenschutzes gegenüber dem Stand der Technik bei realem beliebigem Aufprall (Front-, Heck-, Seitenaufprall und/oder Überschlagen oder Massenkarambolage).

Auf die Entgegenhaltungen DE-OS 4342038 A1, DE-OS 2162071, DE 3103580 A1, US Pat. Nr 3819228 sowie EP 0423465 A1, EP 0642940 A1, EP 0659601 A1 und DE 3726292 C1 lt. DPA Prüfbericht vom 09.09.96 und PCT Recherchenbericht vom 24.03.97 wird Stellung genommen.

Bei den Unfallfahrzeugen in realer beliebiger Kollision [1-5] handelt es sich um Unfallfahrzeuge aus aller Welt und um deutsche sowie Volvo Unfallfahrzeuge mit den weltweit besten Ruf auf Innerer Sicherheit (Insassenschutz) und mit guten bis besten Noten bei Crashtests. Nach Auflösen (Aufheben) loser Verbindung der Halterungspaare und des Paares des Türschlosses beim Front-, Seiten- oder Heckaufprall waren und sind fast alle Insassen, bedauerlicherweise, tödlich verletzt, infolge

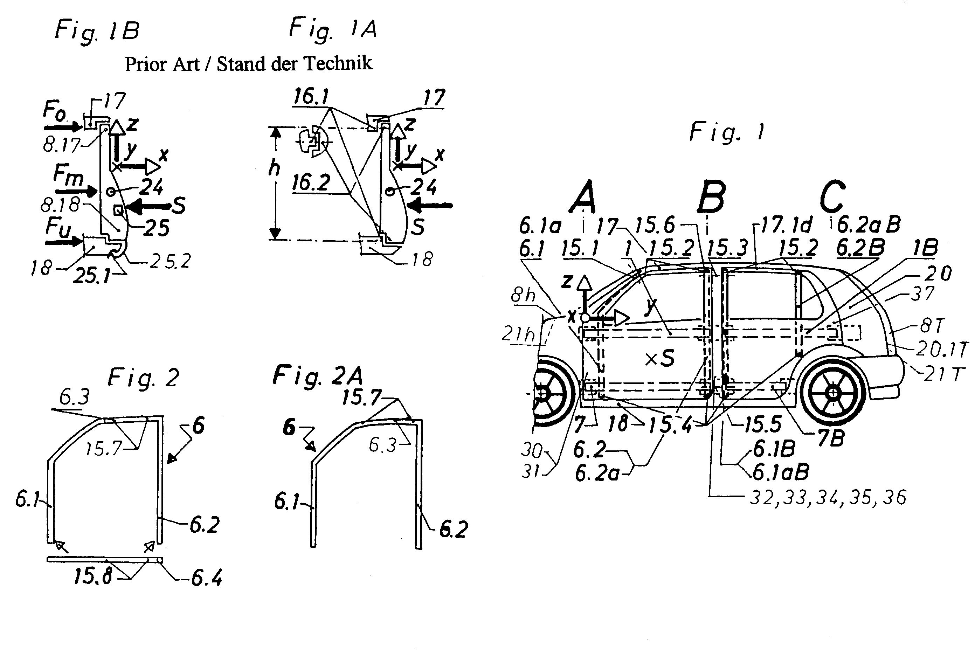

- Herausschleudern aus einem deutschen Wagens [1, 3] in **Fig.** 1 während des Überschlagens;
- Herausschleudern aus einem deutschen Nobelwagen [1, 2] während des Überschlagens, nachdem er gegen einen Baum auf einer Wiesbadener **Straße** aufprallte,
- Herausschleudern eines Jungen wegen Entriegelung der Hecktür **8T** in **Fig.** 1 aus einem Minivan, dessen amerikanischer Hersteller durch ein Geschworenengericht in South Caroline zur Strafe von insgesamt 262.5 Millionen $ [1, 5] verurteilt wurde,
- Intrusion der deformierten Fahrertür eines anderen deutschen Nobelwagens [1]. Trotz des Einsatzes von Brecheisen und Schweißbrenner zum Öffnen der in die Fahrgastzelle (Insassenzelle) *verkrallten*, überbeanspruchten Fahrertür zwecks Retten des Fahrers war jede Hilfe zu spät.

Durch folgende Problemfälle

    **I.** große Toleranzen wegen Fertigung und bei Montage,
    **II.** Analogiebetrachtung,
    **III.** Belastungsfälle nach Techn. Mechanik bei realer Front- und Seitenkollision
    **IV.** fehlerhafte Annahme für einen einzigen, idealen Belastungsfall aus dem bisherigen Stand der Technik
    **V.** Versagen der Insassensicherheit wegen des Problemfalles **IV** bei realem Aufprall wird das Auflösen **loser Verbindung** der Halterungspaare der Türschlösser und Aufprallelemente nachfolgend nachgewiesen:

Problemfall **I:** Neuerdings ist in der Automobilindustrie gleichmäßig (gleich groß) kleine Umlaufspalte zwischen dem Türumriß "abcde" (Außenkontur der Fahrzeugtür **8, 8B**) und der Türöffnung **20.1, 20.1B, 20.1T, 20.1x** in **Fig.** 1, 17, 18 zunehmend angestrebt, da die Umlaufspalte eine Rolle auf Verminderung der Windgeräusche und insbesondere auf Design spielt. Gesamteindruck aus dem Design beeinflußt unmittelbar den Verkaufserfolg. Im fertigen Zustand soll die Umlaufspalte z.B. bei AUDI ® Fahrzeugen 2.5 mm und VW Passat © Fahrzeugen 3.5 mm [8] betragen.

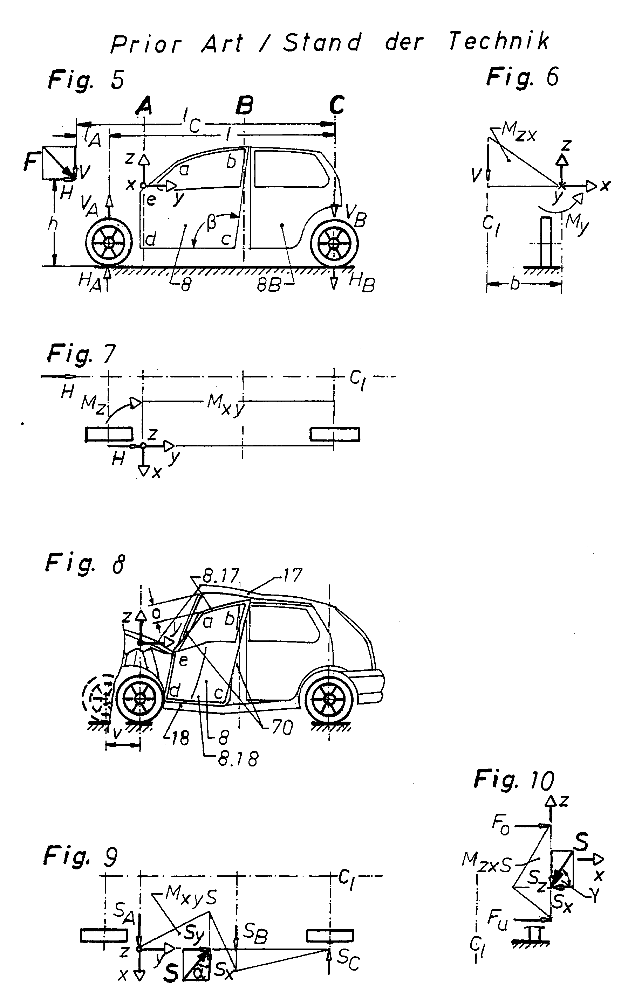

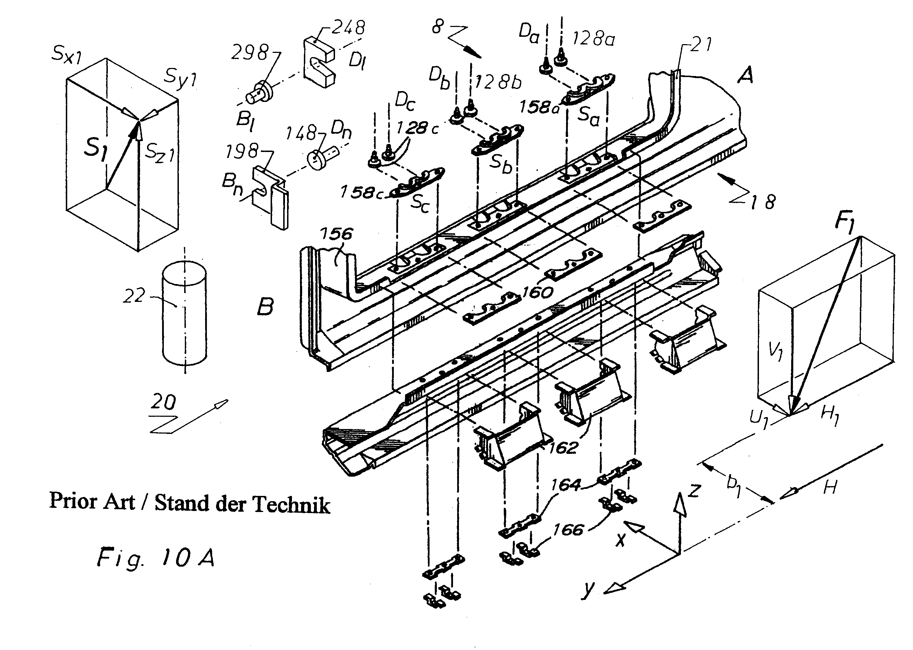

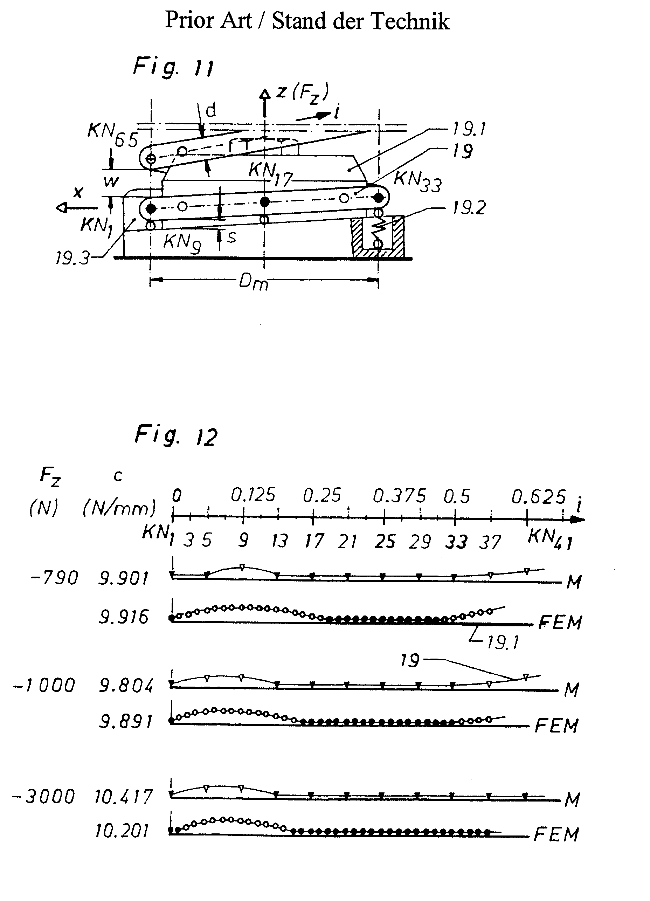

Realisierbar ist die automatische Montage von Fahrzeugtüren mittels einer Vorrichtung gemäß DE 3726292 C1 zur Bestimmung der Meßwerte von sechs Meßpunkten am Türumriß in **Fig.** 18 durch Errechnung der Differenzen zwischen dem Türumriß und der dafür vorgesehenen, karosserieseitigen Türöffnung bei Ein-, Aus- und Einbauen derselben Fahrzeugtür. Hierfür sind die Montage-Toleranzen erforderlich. Nach [7] treten Geräuscherscheinungen (Klappern usw.) während der Fahrt bei unterschiedlichen Schwingungen ein, weil die übereinanderliegenden Windungen allzu kleine Abstände wie $w \leq 0.2$ mm in **Fig.** 11 aufweisen. Dies ist vergleichbar mit den Abständen der zugehörigen Halterungsteile. Aus dem Stand der Technik wird der dem Oberbegriff entsprechende US Pat. Nr 4307911 (DE 3103580 A1) in **Fig.** 10A als Verbesserung gegenüber US Pat. Nr. 3819228 zur Problemdarstellung ausgesucht. Fest angebracht sind

- die Halterungsbolzen **148, 128a bis 128c** an der bereits hergestellten, der Fertigungsstraße zugeführten Fahrzeugtür und
- die zugehörigen Halterungsteilen **198, 158a bis 158c** an der auf der Fertigungsstraße angefertigten Fahrgastzelle.

Erforderlich sind dafür große Fertigungstoleranzen, welche entscheidend größer als die Montage- und Schließ-Toleranzen zwischen Bolzen **298** und Sperrklinke des Türschlosses **248**, um teure Nachbearbeitung auf der Fertigungsstraße, hohe Ausschußquote und Kundenreklamation aufgrund unerwünschter Geräuscherscheinung [7] zu vermeiden. Ausschließlich durch die Einstellvorrichtung von außen gemäß DE 4342038 A1 sowie Neuerfindung lassen sich jene großen Fertigungstoleranzen auf die für formschlüssige Verbindung notwendigen Mindestspiele bei Vermeiden der o.g. Nachteile einstellen.

Problemfall II: In Fig. 11, 12, [6, 7] sind die beiden Endwindungen der Schraubendruckfeder 19 von zwei Federunterlagen 19.1 innen geführt. Ihre äußersten Enden $KN_1$ sowie $KN_{Ende}$ (nicht gezeichnet) stützen sich gegen die zugehörigen Anschlägen 19.3, wobei i Anzahl der Windungen ist. Solche Führung entspricht einer formschlüssigen Verbindung. Zur Abbildung des Abwälzverhaltens der Endwindung auf der Federunterlage wird die Federunterlage durch die Stützfedern 19.2 in Zuordnung der Knotenpunkte idealisiert. Auf das Abwälzverhalten der Endwindung 19 auf die untere Federunterlage 19.1 unter Bezugnahme der durch M gekennzeichneten Meßergebnisse und der durch FEM gekennzeichneten Rechenergebnisse bei $F_z$ = -790, -1000 und 3000 N in Fig. 12, [6] gründet sich der Grenzwert für den Abstand eines "Anlegungszustandes" s < 0.1 mm.

- Nach M legen $KN_2$ bis $KN_5$ an der Federunterlage bei $F_z$ = -790 N an, aber heben bei $F_z$ = -790, -1000 und -3000 N ab.
- Nach FEM befinden sich

| bei $F_z$ | in Berührungszustand | in Anlegungszustand |
|---|---|---|
| -108 | $KN_1$, $KN_{15}$, $KN_{17}$ | $KN_1$-$KN_3$, $KN_{10}$-$KN_{18}$ |
| -250 | $KN_1$, $KN_{19}$, $KN_{20}$ | $KN_1$, $KN_{15}$-$KN_{23}$ |
| -1415 | $KN_1$, $KN_{17}$, $KN_{19}$, $KN_{20}$ $KN_{30}$, $KN_{31}$, $KN_{33}$, $KN_{34}$ | $KN_1$, $KN_{15}$-$KN_{35}$ |

Nachweisbar ist das Auflösen loser Verbindung der Halterungspaare bei zunehmender Aufprallenergie vergleichbar mit dem Abheben (Rückfederung) einiger Elemente beider Endwindungen der Schraubendruckfeder von den zugehörigen Federunterlagen während des Abwälzens auf jenen Federunterlagen.

Problemfall III: Zum Ergründen der Belastungsfälle beim Aufprall bedient sich der Erfinder der Technischen Mechanik, unter den Annahmen, daß die Frontaufprallast 2F entlang der Fahrzeugmittellinie die verteilten Lasten der Energie beim Aufprall ersetze und die Struktur des Fahrzeuges symmetrisch sei.

Belastungsfall I in z-y Ebene in Fig. 5: Das Moment um die x-Achse $M_x$ = H*h wird durch das Kräftepaar $H_A$ = (H*h)/1 mit dem Hebelarm 1 ersetzt. Das Moment durch V ruft folgende Reaktionskräfte hervor: $V_A$ = (V*$l_c$)/1 und $V_B$ = -$V_A$ + V. Die drei Lasten in z-Richtung unter Beachtung des Vorzeichens -V, ($H_A$ + $V_A$) und -($H_A$ + $V_B$) rufen das Biegemoment $M_{zy}$ entlang der y-Achse hervor, wodurch die aus den Säulen, hintereinanderliegenden Fahrzeugtüren 8, 8B mit Aufprallelementen sowie erfindungsgemäßen Halterungspaaren der Türen und Säulen sich zusammensetzende Fahrzeugseite der Struktürhälfte beansprucht wird.

Belastungsfall II in z-x Ebene in Fig. 6: Die Last V ruft ein Biegemoment $M_{zx}$ entlang der x-Achse und ein Drehmoment $M_y$ = V*b um die y-Achse hervor, das als Torsionsmoment die Fahrzeugseite beansprucht.

Belastungsfall III in x-y Ebene in Fig. 7: Die A-Säule wird durch das Drehmoment $M_{xy}$ = -H*b beansprucht. Dem Biegemoment $M_{xy}$ entlang der y-Achse und der Knicklast H ist die Fahrzeugseite ausgesetzt.

Aus diesen Belastungsfällen I bis III durch Biegemomente $M_{zx}$, $M_{xy}$, $M_{zy}$, Knicklast H und Torsionsmomente $M_z$, $M_y$ setzt sich die Gesamtbeanspruchung oder -belastung zusammen, die den Verformungszustand in Fig. 8 nach einer realen Frontkollision [1, 2] liefert. Für Heckaufprall gelten die Belastungsfälle beim Austausch der hintereinanderliegenden Fahrzeugtüren 8, 8B gegeneinander.

Belastungsfall IV in x-y Ebene in Fig. 9: Unter Seitenaufprallenergie S bei Aufprallwinkel $\alpha$ gleich 27° nach FMVSS 214 (US-Seitenaufpralltest) oder bei realer Seitenkollision unterliegt die Fahrzeugseite dem Biegemoment $M_{xyS}$ entlang der y-Achse und der Querlast $S_y$.

Belastungsfall V in z-x Ebene in Fig. 10: Unter Seitenaufprallenergie S bei Aufprallwinkel $\gamma$ oder gegen einen abgewinkelten Autobahnpfeiler oder Baum unterliegt die Fahrzeugseite dem Biegemoment $M_{zxS}$ entlang der z-Achse und der Querlast $S_z$.

Aus diesen Belastungsfällen IV und V setzt sich die Gesamtbeanspruchung zusammen.

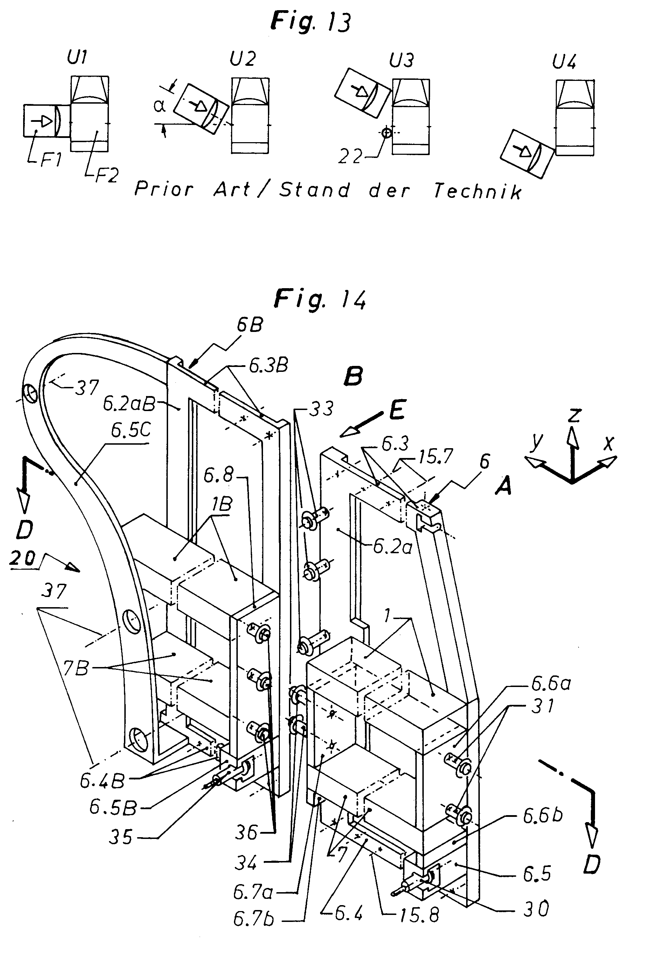

Problemfall IV: Unter vier Kollisionsklassen U1 bis U4 in Fig. 13 [9] nach Auswertung aller Seitenkollisionen "Fahrzeug F1 gegen Fahrzeug F2" weist die Kollisionsklasse U2 unter Aufprallwinkel 0° <$\alpha$ <90° gegen die Fahrertür, wie in Fig. 9, den größten Anteil an schweren und tödlichen Verletzungen auf.

Problemfall V: Auf die Annahme für den idealen Belastungsfall ist das Auflösen loser Verbindung der Halterungspaare, ausgenommen DE 4342038 A1, zurückzuführen, daß

- die Fahrzeugtür *mittig* durch Seitenaufprallenergie S oder $S_{x1}$ unter *Aufprallwinkeln γ = 0° sowie α = 0°* in **Fig.** 1, 1A, 1B, 10A belastet sei und
- *lose* Verbindung für formschlüssige Verbindung gelte.

Wegen der Vereinfachung der Belastungsfällen **I** bis **V** und der unzutreffenden Annahme versagt der Insassenschutz folgendes Fahrzeuges in Crashtests und realem Unfall in **Fig.** 10A:

- Zwischen jeder stark deformierten Fahrzeugtür und der zugehörigen Türaussparung **20.1, 20.1B** der Fahrgastzelle **20** bei Kollaps der B-Säule sind Spalten gebildet, nachdem die sehr hohe Stoßstange eines Geländewagens gegen die Fahrzeugseite eines Testfahrzeuges nach Kollisionsklasse U1 in **Fig.** 13 prallte beim Crashversuch [12].
- Gemäß EP 0642940 A1 (US. Pat. Nr. 5518290, DE 4330620) soll ein Fanghaken **148** des in der Fahrzeugtür angebrachten Verstärkungselementes in die Sollbruchstelle **198** an der B-Säule eindringen und verkrallen, falls dieses Verstärkungselement durch Seitenaufprallenergie S verformt ist. Statt dessen löste sich die Verbindung einer der verstärkten Fahrzeugtüren von der beim Frontaufprall gegen einen Baum deformierten Fahrgastzelle des Nobelwagens [1, 2] des Patentbesitzers auf, wonach alle Fahrzeugtüren nach mehrmaligem Überschlagen entriegelt waren.
- Durch die Energie beim seitlichen Aufprall des fahrerseitigen Schwellers eines 2-türigen teuersten Wagens [1, 3] in **Fig.** 1 gegen eine Pfosten **22** der Mittelleitplanke wurden die Türen **8, 8T** deformiert und entriegelt, wonach während des mehrmaligen Überschlagens die Beifahrertür deformiert wurde und alle vier Insassen herausgeschleudert wurden.
- Der Verkrallungshaken **25.2** der Fahrzeugtür gemäß EP 0423465 A1 soll in die Sollbruchstelle des Verstärkungselement **25.1** des Schwellers **18** durch die seitliche Verformung des unteren Türrahmens **8.18** in **Fig.** 1B, 8 eindringen und verkrallen. Allerdings ist der Anschlußbereich Dach & obere Türrahmen **8.17** der Belastung $F_o$ ausgesetzt. Durch die Energie nach dem Sturz eines Sportwagens [4] des Patentbesitzers in die 7 m tiefe Unterführung in Wiesbaden wurden die oberen Türrahmen **8.17** beider Fahrzeugtüre und Dach **18** deformiert. Über die integrierten Sitzen und Insassen wurde die Restenergie in den Fahrzeugboden eingeleitet.

Im Bericht [1] für die EU-, US-, deutschen und kanadischen Verkehrsbehörden sind der Zusammenhang des weiteren Versagens des Insassenschutzes aller Fahrzeuge mit dem bisherigen Stand der Technik, die täglichen Folgekosten von über 1 Milliarden $ und die Spezifikationen für die zukünftigen Crashtests wohl begründet. Ein Direktor der NHSTA [13] hat die Richtigkeit der Themen und Verpflichtung gegenüber den Verbrauchern bestätigt.

Zwecks Vereinfachung der Formulierung werden folgende Begriffe für die exakten Bezeichnungen eingeführt:

| Begriff: | exakte Bezeichnung: |
|---|---|
| "*alle hintereinanderliegende Fahrzeugtüren*" | eine oder beliebig hintereinanderliegende Fahrzeugtüren jeder Fahrzeugseite. |
| "*Tragelement*" | Blech, Schale, Balken usw. nach FEM und Technischer Mechanik |
| "*Fensterführungsteilen*" der Fahrzeugtüren | Fensterführungsschienen **6, 6B, 6.1, 6.2, 6.1B, 6.2B, 6.1a, 6.2a, 6.1aB, 6.2aB** |
| "*Türkörper*" | Raum zwischen der Türaußenhaut und -innenhaut |
| "*Türentriegelung*" | Fahrzeugtür ist der Fahrgastzelle entriegelt |
| "*Halteloch*" | Halteaussparung, -öffnung, -längsloch |
| "*Verbundpaar*" | zwei Fahrzeugteile, die beim Aufprall miteinander verbunden sind, wie Fahrzeugtür & Schweller, Fahrzeugtür & Säule(n), Fahrzeugtür & Fahrzeugtür, Fahrzeugtür & Fahrgastzelle, Fahrzeugtür & Dach |

Zweifellos beeinflußt der stilistische Gesamteindruck durch den aus der Innenverkleidung *in die Fahrgastzelle hineinragenden, klobigen* Bolzen als Halterungsteil gemäß US Pat. Nr. 3819228 negativ den Verkauf Beim Ein- und Aussteigen während des Reinigens oder Reparierens kann sich der Insasse nach dem Stolpern über diesen *klobigen* Bolzen verletzen. Befinden sich versehentlich ein Kleidungsstück und Körperteil zwischen den Halterungsteilen insbesondere in Dunkelheit, so ist die Gefahr der Zerstörung und Verletzung beim Türschließen nicht auszuschließen. Siehe Problemfall **V** und Gegenmaßnahmen in Abs. G, H und J.

Beim Seitenaufprall in **Fig.** 1, 1A sollten die Randaufbauorgane gemäß DE-OS 2162071 als Halterungspaare aus Umfangsnuten **16.2** und Umfangsfedern **16.1** miteinander formschlüssig verbunden sein, zwecks Verbund der Fahrzeugtür mit dem Schweller **18**, Dach **17** in **Fig.** 1A und mit der B-Säule. Wäre der Türumriß "abcde" viereckig, dann ließe sich ohne Halterungspaar an der B-Säule die Fahrzeugtür öffnen oder schließen. Da in **Fig.** 5 und 18 die Linie "ab" kurvenförmig, die Linie "bc" der Vordertür geneigt ($\beta > 90°$) oder räumlich kurvenförmig und die Linie "bc" der Hintertür räumlich S-förmig verläuft, verkanten die Umfangsnuten gegen die Umfangsfedern beim Versuch des Türschließens. Wegen großer Aufprallenergie muß die Umfangsnut durch Verstärkangselement versteift werden, welches an dem schmalen, oberen Fensterrahmen nicht anbringbar ist. Siehe Problemfall **V** und Gegenmaßnahmen in Abs. H und J.

Gemäß EP 0659601 A1 (US Pat. Nr 5297841) ist ein beliebiges L-Profil Verstärkungselement mit einem Haken und einer Halteaussparung an der dem Türschloß zugewandten Türseitenhaut der 1. Fahrzeugtür vertikal befestigt. Beim Seitenaufprall greift der Haken in das Halteloch im Schweller ein und stützt die Halteaussparung gegen einen an der 2. Fahrzeugtür befestigten Zapfen ab, fast ähnlich wie EP 0423465 A1 in **Fig.** 1B. Als Ladedoppeltür eines Vans gehören die beiden Türen zusammen. Im Gegensatz zu EP 0423465 A1, DE 4342038 A1 und den erfindungsgemäßen Fensterführungsteilen mit Halterungsteilen:

- trägt das *vertikal liegende* Verstärkungselement zur Erhöhung der Biegesteifigkeit gegen Querbelastung beim Seitenaufprall *kaum* bei,
- mit *Bruch* des unterdimensionierten Hakens als Schwachstelle ist zu rechnen und
- das andere Halterungspaar hält der Querbelastung *keinesfalls* stand.

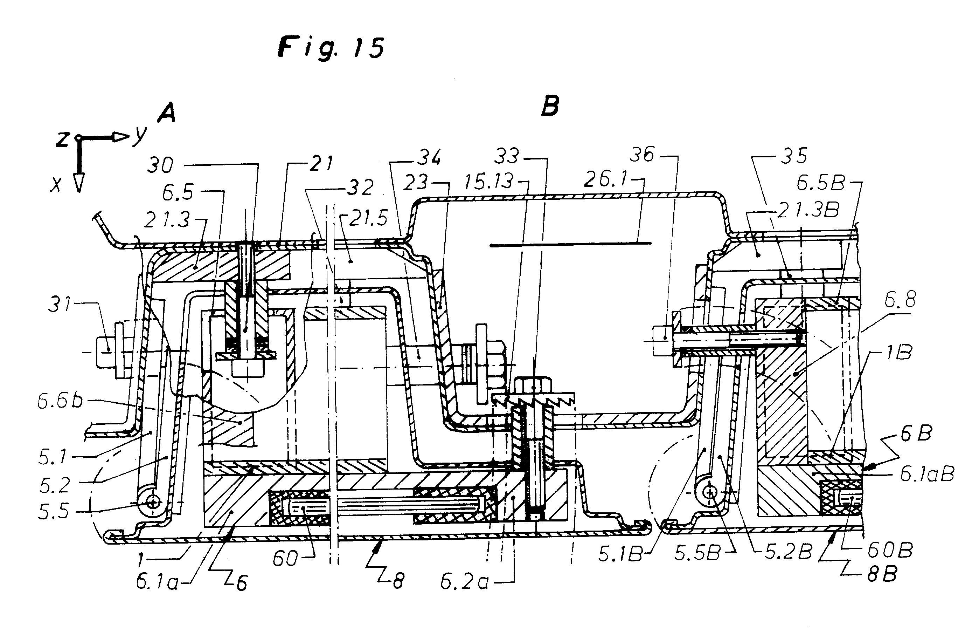

Gemäß DE 4342038 A1 sind Halterungspaare *2.1* an den beiden Aufprallbalken **1,7** oder **1B, 7B** und der zugehörigen Säule sowie *5.6* an den Bändern **5.1, 5.2** beider Türscharniere in **Fig.** 15 angeordnet. Infolge der Verriegelung der von außen einstellbaren Halterungspaare mittels Sperrung und/oder Schließteil und/oder infolge des Ineinanderverkrallens aufgrund der Mindestspiele im Verformungszustand bei beliebigem Aufprall sind alle Fahrzeugtüren immer verriegelt und im Verbund mit allen Säulen zur Erhöhung der Struktursteifigkeit bzw. zur Spannungsverminderung. Siehe Nachteile in Abs. I.

Ständig erweitert und verschärft wird der Insassenschutz durch FMVSS 214, EU-, US-Crashtests und neue Spezifikationen [1]. Bei dem kommenden EU-NCAP-Crashtest wird das Fahrzeug bei v = 64 km/h gegen eine *verformbare* (deformierbare ist eine falsche Übersetzung aus Englisch) Barriere mit 40% Offset gefahren. Ungleiche Verformungszustände lieferten drei Crashversuche [11] dergleichen Testfahrzeuge gegen

- eine unverformbare Barriere,
- eine verformbare Barriere und
- ein anderes Testfahrzeug desgleichen Typs,
  weil die Lastverteilung, die verformbare Eigenschaft der gegeneinander kollidierenden Massen, Aufprallbedingung usw. verschieden sind.

Mit den Stellungnahmen [10] auf das Versagen des Insassenschutzes bei einigen Unfallfahrzeugen und mit der Überprüfung der Erfindung zur Einstellung der Halterungspaare auf Mindestspiele gemäß DE 4342038 A1 bestätigte das Institut für Fahrzeugsicherheit

- das Herausschleudern der Insassen aus den Unfallfahrzeugen wegen der mangelhaften Türverriegelung und
- die verbesserten Randbedingungen zur Türverriegelung und Verteilung der Aufprallenergie.

Der Erfindung für

- Insassenschutz gegen das Herausschleudern aus dem Unfallfahrzeug und/oder die Intrusion eines Fahrzeugteiles und
- Erhöhung der Struktursteifigkeit

bei realem beliebigem Aufprall liegt mithin die Aufgabe zugrunde, formschlüssige Verbindung der mit großen Toleranzen bedingt durch Fahrzeugbau und Türmontage versehenen Halterungspaare der zugehörigen Verbundpaare zu schaffen. Die erfindungsgemäße Lösung dieser Aufgabe besteht in den Merkmalen des Patentanspruches 1. Die Unteransprüche beschreiben vorteilhafte Ausbildungen der Erfindung. Jene Lösung und Ausbildungen setzen sich aus folgenden Lösungsansätzen zusammen:

- formschlüssiger Verbindung durch die Einstellung der von außen montierbaren und einstellbaren Halterungsteile auf Mindestspiele zum Sicherstellen der Türverriegelung und Ineinanderverkrallen der Halterungspaare zwecks Verbund aller hintereinanderliegenden Fahrzeugtüren mit allen Säulen, dem Dach **17**, der mit den gegenüberliegenden Schwellern **18** kraftschlüssig verbundenen Bodengruppe und der Fahrgastzelle **20** bei beliebigem Aufprall,
- Halterungspaaren mit Einstellmöglichkeit wie Haltelöchern & Haltekloben **15.1 bis 15.5a, 15.7, 15.8**, Halteklammern **15.6** & Verstärkungsrohr **17.1d** sowie Haltelöchern & Haltekloben **30 bis 37** in **Fig.** 1, 3, 3A, 4, 4A und 14 bis 18,
- Fensterführungsteilen zur Aufnahme der Halterungsteile
- platzsparenden und kostengünstigen Halterungsteilen,
- Anordnen der Halterungspaare eines Verbundpaares in mindestens zwei Wirkebenen,
- Anordnen des Halteloches möglichst an dem Fahrzeugteil zwecks formschlüssiger Unterbringung des Halteklobens im Innern des Fahrzeugteiles und
- U-Block zur formschlüssigen Verbindung der Halterungsteile mit den zugehörigen Halterungsteilen der nebeneinanderliegenden Fahrzeugtüren.

Für Insassenschutz bei realer beliebiger Seitenkollision sind die Halterungspaare aus Stand der Technik nicht geeignet. Die Realisierung für Insassenschutz bei realer beliebiger Kollision bedeutet Mehrkosten, F&E (Forschung und Entwicklung)-Mehraufwand, und Gewichtszunahme wegen der Verwendung anderer Erfindungen. Kurzfassung der mit der Erfindung erzielten Vorteile:

A) Zeiteinsparung wegen der Montage und Justierung von außen.

B) weniger Ausschußquote.

C) platzsparende und preiswertere Bauweise.

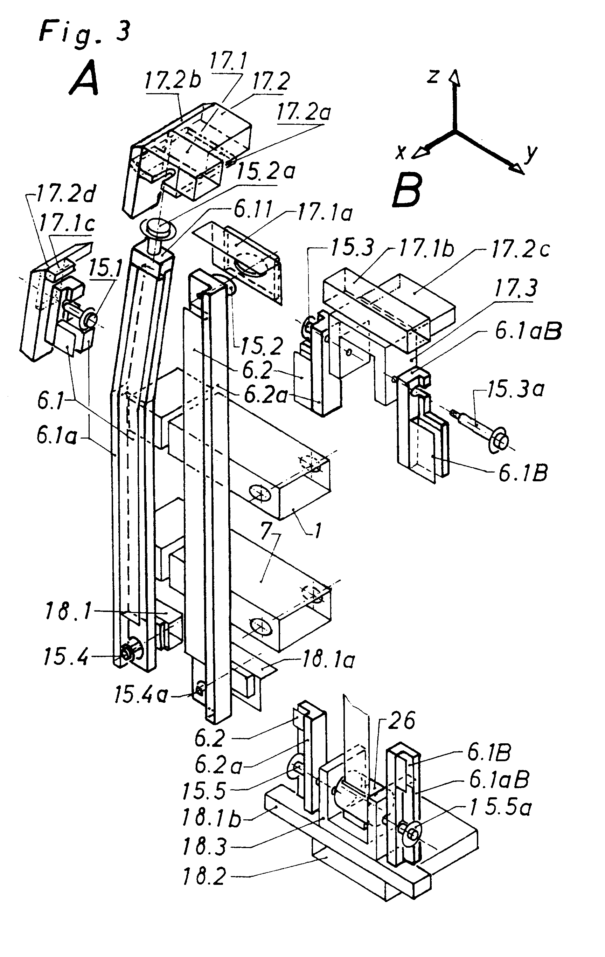

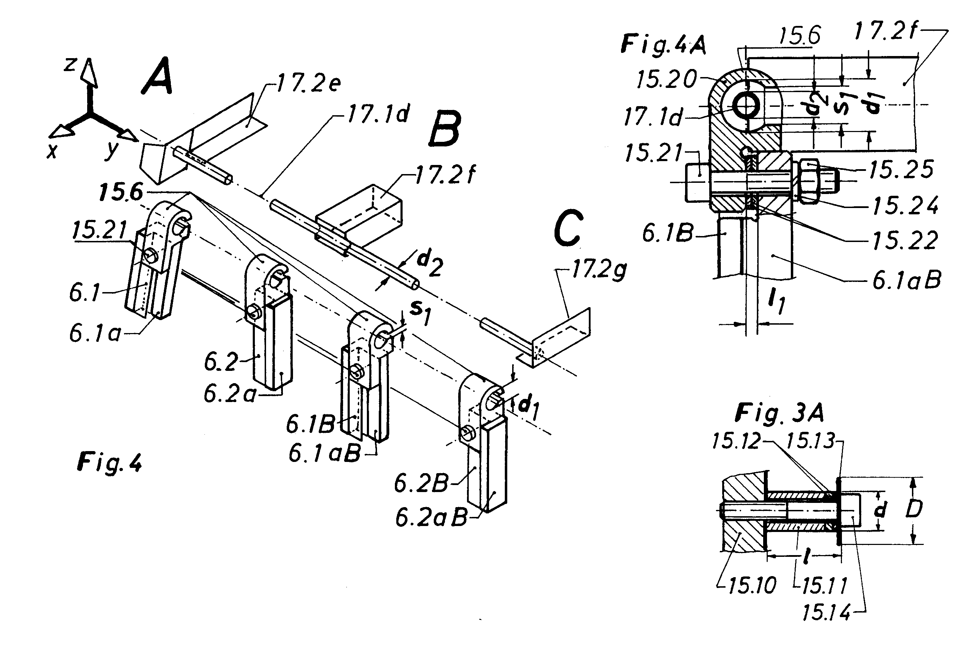

D) ungleiche Wirkebenen oder mindestens zwei Wirkebenen der Halterungspaare für jedes Verbundpaar zur Optimierung des Aneinanderkeilens und Ineinanderverkrallens in Verbindung mit Energieabsorption wegen der Belastungsfälle in unterschiedlichen Ebenen. In **Fig.** 14 bis 18 sind die Halterungspaare Haltekloben **34** & Haltelöcher in z-x Ebene als 1. Wirkebene, dagegen Halterungspaare Haltekloben **32, 33** & Haltelöcher in z-y Ebene als 2. Wirkebene für *ein einziges Verbundpaar* Fensterführungsteil & B-Säule verantwortlich, dessen strenge Mindestspiele "eng" auf "weniger eng" ausgelegt werden können. Somit verringern sich die Kosten für Justierungsarbeit. Das Merkmal der ungleichen Wirkebenen trifft ebenso die beiden Halterungspaare Haltelöcher & **15.1, 15.2a** sowie **15.2, 15.3** und **15.4a, 15.5** usw. in **Fig.** 3 zu. Kommt eine Anzahl von den gleichen Haltekloben **15.1** entlang der räumlich geneigten A-Säule oder Haltekloben **33** entlang der räumlich geneigten B-Säule zum Einsatz, so hat die Reihe dieser Haltekloben ungleiche Wirkebenen. Im globalen xyz Koordinatensystem hat der Haltekloben **15.2a** & Halteloch eine geneigte Wirkebene. Da die Türscharnierbolzen **5.5, 5.5B** der Vorder- und Hintertür eine Wirkstellung in z-Achse aufweisen, ist das Anordnen der Halterungspaare Haltelöcher & **31,36** in einer Wirkebene ausreichend. Dennoch trägt ein zusätzliches Anordnen der Halterungspaare Haltelöcher & **30, 35** zur Erhöhung der Türverriegelung und extremen Reduzierung tödlicher Verletzungen bei realem Aufprall bei.

E) geringeren F&E Aufwand wegen weniger FEM Berechnungen, Crashversuche und Materialeinsparung dank vielseitiger Möglichkeit zum Anordnen der Halterungspaare in ungleichen Wirkebenen.

F) Insassenschutz für alle Kollisionen durch eine **einzige** Konstruktion, Fertigung, Erprobung und Montage bei einer einmaligen Materialversorgung.

G) Ausnutzung der mit Türabdichtung **21.10** versehenen Umfangskanten **21, 21T, 21h, 21x** der Fahrgastzelle **20** in **Fig.** 1, 17, 18 aufgrund des vorhandenen Platzes zur Unterbringung der Halterungsteile und des stetigen Spannungsverlaufes. Nicht störend auf das Ein- und Aussteigen wirkt sich das Ausbauen der Umfangskanten in begrenztem Maße (wegen Gesamteindruck) aus. Durch die gestrichelt gezeichneten Linien "a1", "b1", "b2" und "c1" im Bereich der jeweiligen Säulen wird es gekennzeichnet.

H) stilistischen Gesamteindruck. Als Ersatz für den klobigen Halterungsbolzen gemäß US Pat. Nr 3819228 lassen sich unauffällig kleine Halterungsteile entlang den Fensterführungsteilen verteilen, mit der Folge der Spannungsverringerung. Diese Maßnahme ermöglicht das Anbringen der Halterungsteile

- **30, 32, 35, 37** an den jeweiligen Umfangskanten **21** der Fahrgastzelle **20**. Im Gegensatz zu US Pat. Nr. 3819228 stellen sie keine Gefährdung für Insassen beim Ein- und Aussteigen dar. Zum Insassenschutz sowohl gegen Seitenaufprall insbesondere nach Kollisionsklassen U1 und U2 in **Fig.** 13 als auch gegen Frontaufprall ist dieses Merkmal nützlich.
- **15.2a, 15.2, 15.7** z.B. mit Schrauben M4 an dem schmalen Fensterführungsteil **6.3, 6.3B** des oberen Türrahmens **8.17** als Lösung für die große, steile Umlaufnut gemäß DE-OS 2162071.
- **33, 34, 36** an den jeweiligen Fensterführungsteilen **6, 6B** und Hilfsteilen **6.7, 6.8** im Verbund mit der verstärkten B-Säule in zwei oder drei Wirkebenen ohne den Betrieb des Gurtes **26.1** in **Fig.** 15 zu stören. Die gestrichelt gezeichneten Bahnkurven kennzeichnen die beiden Außenpunkte der zugehörigen Unterlegscheiben und die Türkanten während des Öffnens der hntereinanderliegenden Fahrzeugtüren, um den Nachweis der Nichtberührung der Haltekloben mit den jeweiligen Haltelöchern und der Türkanten der hintereinanderliegenden Fahrzeugtüren miteinander zu erbringen.

- **31** an den jeweiligen Fensterführungsteilen **6** und Hilfsteilen **6.6a** im Verbund mit der verstärkten A-Säule.

I) geringere Spannung als Maßnahme gegen Deformation. Durch die Anordnung der Halterungspaare in mehreren Wirkebenen und Vermehrung der Verbundpaare Fahrzeugtür & Dach **17**, Fahrzeugtür & Schweller **18**, Fahrzeugtür & Säule(n) und Fahrzeugtür & Fahrgastzelle **20** beteiligen sich vermehrt Fahrzeugteile im Verbund an der Energieabsorption in unterschiedlichen Belastungsfällen bei beliebiger Kollision. Unter Hinzunahme der DE 4342038 A1 erreicht die Struktursteifigkeit der Neuerfindung das Maximum Zweifellos liegt der Vorteil der Halterungspaare *2.1, 5.6* & Haltelöcher an dem Ausnutzen der sehr steifen Aufprallbalken. Wegen der Anordnung jener Halterungspaare *ausschließlich* an den Aufprallbalken **1,7** und fehlender Halterungspaare der Verbundpaare Fahrzeugtür & Schweller und Fahrzeugtür & Dach können folgende verletzungsrelevante Verformungszustände bei realer beliebiger Kollision vorkommen:

- Intrusion des Daches in die Fahrgastzelle, des oberen und unteren Türrahmens **8.17, 8.18** mit der Folge des Erdrückens der Insassen.
- Knicken des oberen Teiles der A-Säule, Deformation des oberen Türrahmens, Ausbeulen des Daches **17** und Knicken des Schwellers **18** in **Fig.** 8.

Verhindert wird es durch Verwendung von mehreren Haltelöchern & Haltekloben **30 bis 37** *oberhalb* des obersten Aufprallbalkens **1, 7**, *unterhalb* des untersten sowie *dazwischen* bei Verzicht auf jene Halterungspaare *2.1, 5.6*. Werden *zwei nicht einstellbare* Halterungsteile *5.6* der Türscharniere in x-z Wirkebene durch eine Anzahl von Halterungspaaren *15.1, 15.2a, 15.4, 30, 31* in mehreren Wirkebenen ersetzt, dann verläuft die Gesamtspannung des Verbundpaares A-Säule & Fahrzeugtür entlang der z-Achse *gleichmäßiger* und *kleiner* aufgrund der Verteilung der Aufprallenergie, mit der Folge, daß die Deformation der A-Säule und Fahrzeugtür in **Fig.** 8 weitestgehend vermeidbar ist.

J) Schutz gegen Herausschleudern der Insassen aus dem Unfallfahrzeug und gegen Deformation der Fahrgastzelle **20** in Problemfall **V**, wobei die Fahrzeugtüren gering verformt sind. Lösbar ist dieses Versagen ausschließlich *durch Ineinanderverkrallen* folgender Halterungspaare dank der Mindestspiele:

- Haltelöcher & Haltekloben **15.3, 15.3a, 15.5a, 15.5** dank der U-Blöcke **17.3, 18.3**, deren Verformung eine Zwangsverformung der nebeneinanderliegenden Fahrzeugtüren, des Daches und Schwellers zur Folge hat,
- Haltelöcher & Haltekloben **32, 33, 34, 30, 15.4, 15.4a** dank der formschlüssigen Unterbringung der Haltekloben in den Haltelöchern und Anordnung in ungleichen Wirkebenen (Abs. D), *und/oder*
- Halteklammern **15.6** & Verstärkungsrohr **17.1d** für die beiden Verbundpaare nebeneinanderliegende Fahrzeugtüren & Schweller und nebeneinanderliegende Fahrzeugtüren & Dach dank der Zwangsverformung der nebeneinanderliegenden Faurzeugtüren durch die Verformung des Schwellers und Daches, und *durch Krafteinleitung* in die andere Fahrzeugseite dank der Querträger **17.2, 17.2b, 17.2c, 17.2d, 18.2** des Daches und Schwellers, welche alle gegenüberliegenden Säulen miteinander kraftschlüssig verbinden. Durch Verteilung und Mehrabsorption der Energie sind tödliche Verletzungen und Deformation bei jeder realen Kollision mit höchster Wahrscheinlichkeit vermeidbar.

K) Insassenschutz gegen Türentriegelung beim Heckaufprall. Die Entriegelung der Hinter- und Fahrertür macht sich beim Heckaufprall durch das Fehlen von Türscharnieren und ineinanderverkrallenden Halterungspaaren an der B- und C-Säule bemerkbar. Bessere Krafteinleitung und Ineinanderverkrallen der Halterungspaare gegen Türentriegelung verspricht der Verbund der Hintertür **8B** mit der C-Säule durch das Anbringen

- des für die Haltelöcher der Haltekloben **37** vorgesehenen, dem Türumriß angepaßten Hilfsteiles **6.5C** an den Teilen der Hintertür in **Fig.** 14, 18 und
- der Haltekloben **33, 34** am Fensterführungsteil **6B**.

Zweifellos eignen sich die erfindungsgemäßen Merkmale der Fährzeugtür für Verriegelung des Kofferraumdeckels **8x** in **Fig.** 18, der Hecktür **8T**, Fronthaube **8h** in **Fig.** 1, Schiebetür, Ladedoppeltür, *beliebig* hintereinanderliegenden Fahrzeugtüren und Säulen, z.B. *drei* Fahrzeugtüren mit *vier* Säulen bei großen Vans.

Folgende Zeichnungen zeigen Ausführungsformen der Erfindung unter Berücksichtigung des globalen xyz Koordinatensystemes:

**Fig.** 1 eine Seitenansicht der Fahrzeugseite, Aufprallbalken, Haltekloben, Halteklammer, Fensterführungsschienen und Fensterführungsteile (Verstärkungselemente).

**Fig.** 1A eine Schnittzeichnung einer Fahrzeugtür versehen mit den beiden Halterungspaaren im Eingriff mit dem Dach und Schweller nach DE-OS 2162071 beim Seitenaufprall.

**Fig.** 1B eine Schnittzeichnung einer Fahrzeugtür versehen mit einem Halterungspaar im Eingriff mit dem Schweller nach EP 0423465 A1 beim Seitenaufprall.

**Fig.** 2 eine Seitenansicht eines U-Profil Fensterführungsteiles, der Positionierung der Haltekloben **15.7, 15.8** und eines zusätzlichen Fensterführungsteiles **6.4, 6.4B**.

**Fig.** 2A eine Seitenansicht eines U-Profil Fensterführungsteiles und der Positionierung der Haltekloben **15.7**.

**Fig.** 3 eine perspektivische Ansicht des vorderen Türfachwerkes mit beiden Fensterführungsschienen und Fensterführungsteilen sowie der Halterungspaare der 1. Ausführungsform.

**Fig.** 3A eine Schnittzeichnung eines Halteklobens mit Einstellmöglichkeit.

**Fig.** 4 eine perspektivische Ansicht der Halterungspaare der 2. Ausführungsform Halteklammern & Verstärkungsrohr.

**Fig.** 4A eine Schnittzeichnung der Halteklammer mit Einstellmöglichkeit und des Verstärkungsrohres.

**Fig.** 5 einen Belastungsfall I in z-y Ebene beim Frontaufprall eines Fahrzeuges.

**Fig.** 6 einen Belastungsfall II in z-x Ebene beim Frontaufprall.

**Fig.** 7 einen Belastungsfall III in x-y Ebene beim Frontaufprall.

**Fig.** 8 einen Verformungszustand eines durch Frontaufprall deformierten Fahrzeuges bei Verschiebung v.

**Fig.** 9 einen Belastungsfall IV in x-y Ebene beim Seitenaufprall eines Fahrzeuges.

**Fig.** 10 einen Belastungsfall V in z-x Ebene beim Seitenaufprall.

**Fig.** 10A eine perspektivische, schematische Ansicht der Halterungspaare gemäß US Pat. Nr 4307911 (DE 3103580 A1).

**Fig.** 11 eine Ansicht einer Schraubendruckfeder auf einer unteren Federunterlage.

**Fig.** 12 Abwälzverhalten der Knotenpunkte der Endwindung auf die untere Federunterlage aus Messung und FEM unter unterschiedlicher Belastung, wobei die Endwindung und untere Federunterlage abgewickelt sind.

**Fig.** 13 vier Kollisionsklassen U1 bis U4 lt. der Forschungsarbeit des Büros für Kfz-Technik.

**Fig.** 14 eine perspektivische Ansicht der Halterungspaare der 3. Ausführungsform aus dem vorderen Türfachwerk mit einem einzigen Fensterführungsteil und aus dem hinteren Türfachwerk mit einem einzigen Fensterführungsteil zum Verbund mit den Säulen.

**Fig.** 15 eine Schnittzeichnung der hintereinanderliegenden Fahrzeugtüren im Verbund mit der A-, B-Säule und der Fahrgastzelle entlang der Linie D-D in **Fig.** 14.

**Fig.** 16 eine Seitenansicht der hintereinanderliegenden Türfachwerke ohne Fensterscheibe im Verbund mit der B-Säule gemäß Pfeil E in **Fig.** 14.

**Fig.** 17 eine perspektivische Ansicht der Halterungspaare der 4. Ausführungsform aus dem vorderen Türfachwerk mit einem einzigen Fensterführungsteil zum Verbund mit den Umfangskanten der Fahrgastzelle

**Fig.** 18 eine Seitenansicht der Umfangskanten der Fahrgastzelle.

Die 1. Ausführungsform in **Fig.** 3 besteht aus Halterungspaaren, deren Halterungsteile an zwei Fensterführungsteilen einer Fahrzeugtür und deren zugehörige Halterungsteile an der A-, B-Säule, dem Dach sowie Schweller angebracht sind.

Die 2. Ausführungsform in **Fig.** 4 besteht aus einem Halterungspaar, dessen Halteklammer an zwei Fensterführungsteilen jeder Fahrzeugtür und dessen Verstärkungsrohr an dem Dach sowie allen Säulen angebracht sind. Das Verstärkungsrohr dient zur Versteifung des Daches und Kostensenkung durch Vereinfachung der Positionierung bei der Montage. Allerdings bedarf diese Ausführungsform Platz, was bei großen PKW, LKW und Vans ohnehin vorhanden ist.

Die 3. Ausführungsform in **Fig.** 14 bis 16 besteht aus Halterungspaaren, deren Halterungsteile an einem Fensterführungsteil jeder Fahrzeugtür **8, 8B** und deren zugehörige Halterungsteile an der A-, B-Säule sowie den zugehörigen Verstärkungselementen **21.3, 21.3B** der Umfangskanten **21** der Fahrgastzelle **20** angebracht sind. Beliebig anordnen lassen sich die Haltekloben **30 bis 37** & Haltelöcher an den Fahrzeugtüren, Säulen und der Fahrgastzelle. Nach Verschweißen des Verstärkungselementes **23** mit der Innenfläche der B-Säule werden die Haltelöcher bearbeitet.

Verdeutlicht werden in der 4. Ausführungsform

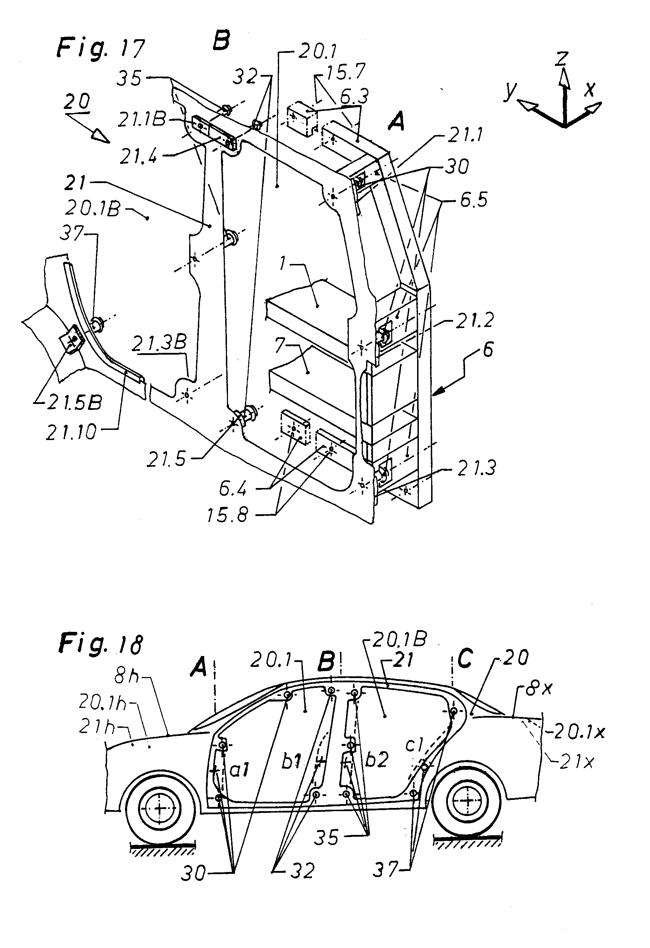

- die Positionierung zweier in **Fig.** 17 dargestellter Halterungspaare **30 & 6.5, 35 & 6.5B** sowie der anderen **32 & 6.9, 37 & 6.9B** (**6.9, 6.9B** identisch mit **6.5**),
- die Umfangskanten der Fahrgastzelle **20** und die ausgebauten Umfangskanten mit den gestrichelt gezeichneten Linien "a1", "b1", "b2" und "c1" in **Fig.** 18 entlang den Säulen für die Unterbringung der Halterungsteile **30, 32, 35, 37**,
- zwei Verbundpaare Umfangskante der Fahrgastzelle **20** & Fensterführungsteil **6** der Vordertür **8** sowie Umfangskante der Fahrgastzelle **20** & Fensterführungsteil **6B** der Hintertür **8B**,
- das feste Anbringen der Haltekloben **30, 32, 35, 37** an den zugehörigen Verstärkungselementen **21.1 bis 21.5, 21.1B bis 21.5B** der Umfangskanten der Fahrgastzelle **20**. Der Vorteil des Verschweißens der Verstärkungselemente mit den an den Fahrzeugtüren *abgewandten* Umfangskanten liegt darin, daß ein einziges Stück bestehend aus z.B. **21.4, 21.1B** benötigt wird. Zwischen die Blechen der Fahrgastzelle lassen sich die Verstärkungselemente auch setzen. Das Verstärkungselement **21.5B** wird an den Übergang und hinteren Kotflügel angeschweißt. Genauso läßt sich **21.1** an dem Übergang und vorderen Kotflügel anbringen.

Lt. DE 4342038 A1 Beschreibung läßt sich bei Verzicht auf Türträger und Aufprallelemente ein Türfachwerk einer Fahrzeugtür aus mindestens zwei mit Halterungspaaren versehenen Aufprallbalken und mindestens einem Fensterführungsteil **6, 6B, 6.1, 6.2, 6.1B, 6.2B, 6.1a, 6.2a, 6.1aB, 6.2aB** zusammenbauen. Normalerweise kommt dünnes Blechprofil für die Fensterführungsschienen **6.1, 6.2, 6.1B, 6.2B** in **Fig.** 1 und 3 zum Einsatz. Als *Tragelemente* oder *Verstärkungselemente* sind die Fensterführungsteile mit höherer Festigkeit **6, 6B, 6.1a, 6.2a, 6.1aB, 6.2aB** in **Fig.** 1, 3, 4, 14 bis 18 für folgende erfindungsgemäße Aufgaben vorgesehen, zwecks:

- Verstärkung der aus Blechprofil hergestellten Fensterführungsschienen,
- Aufnahme der Halterungsteile wie Halteklammer, Halteklobens und/oder Halteloches,
- Aufnahme der Hilfsteile **6.5, 6.5B, 6.6a, 6.6b, 6.7a, 6.7b, 6.8, 6.9** (nicht gezeichnet), welche als Tragelemente hohe Festigkeit besitzen.

Fest angebracht sind folgende Hilfsteile

- **6.8, 6.9** an den Stirnseiten beider Aufprallbalken **1B, 7B** und dem Fensterführungsteil **6B**,
- **6.6b, 6.7b** am Fensterführungsteil **6** und Aufprallbalken **7** sowie
- **6.6a, 6.7a** zwischen beiden Aufprallbalken **1, 7** und am Fensterführungsteil **6**.

Ersetzen lassen sich die beiden Fensterführungsteile durch ein U-Profil und festigkeitsmäßig Ersetzen lassen sich die beiden Fensterführungsteile durch ein U-Profil und festigkeitsmäßig hohes Fensterführungsteil **6, 6B** in **Fig.** 2, 2A, 14 bis 17. Bei der herkömmlichen Konstruktion sind die Teile **6.3, 6.3B** aus Blech. Dagegen findet das steife Fensterführungsteil **6.3, 6.3B** als Tragelement in **Fig.** 14, 17 eine weitere Verwendung für die Aufnahme der Fensterscheibe und Haltekloben **15.7**.
Die beiden Enden des mit dem Fensterführungsteil **6.3, 6.3B** versehenen Fensterführungsteiles **6, 6B** sind im Türkörper in **Fig.** 2A offen. Zur Maximierung der Steifigkeit des Fensterführungsteiles **6, 6B** sind seine beiden Enden miteinander durch ein Fensterführungsteil **6.4, 6.4B** im Türkörper in **Fig.** 2, 14 bis 17 kraftschlüssig verbunden:

- nachdem die Fensterscheibe eingeschoben ist, *oder*
- dessen Profil, z.B. flaches in **Fig.** 14, 15, 17 das Einschieben der Fensterscheibe **60, 60B** in **Fig.** 15 zuläßt. Diese Fensterscheibe wird durch Sicherungsteile gegen Herunterfallen gesichert.

Zur Aufnahme der Halterungsteile **15.8** ist das Fensterführungsteil **6.4, 6.4B** verwendbar. Da bei *schweren* PKW, LKW und Vans Gewichtsersparnis *keine wesentliche* Rolle spielt, ist eine *Aufgabenverteilung* durchaus denkbar, daß

- das an den Aufprallbalken befestigte Fensterführungsteil als verstärkter Türrahmen für das Anbringen der Halterungsteile <u>und</u>
- die Fensterführungsschienen aus Blechprofil für die Führung sowie Aufnahme der Fensterscheibe vorgesehen sind.

Zum Verkrallen in die zugehörigen Halterungsteile folgender Fahrzeugteile sind folgende Halterungsteile an den Fensterführungsteilen anbringbar:

- **15.1, 15.2, 15.2a, 15.3, 15.3a, 15.4, 15.4a, 15.5** und **15.5a** entlang dem Dach, Schweller und den Säulen,

- **15.3, 15.3a** und/oder **15.5, 15.5a** an der *gemeinsamen* Säule der nebeneinanderliegenden Fahrzeugtüren z.B. *B- und C-Säule* eines 6-türigen Vans,
- **30** und **31** an der A-Säule,
- **33, 34, 35** und **36** an der *gemeinsamen* Säule der nebeneinanderliegenden Fahrzeugtüren,
- **33** und **34** an der C-Säule,
- **15.7** ersetzt durch mindestens einen Haltekloben **15.2, 15.2a, 15.4, 15.4a, 30 bis 37** entlang dem Dach,
- **15.8** ersetzt durch mindestens einen Haltekloben **15.2, 15.2a, 15.4, 15.4a, 30 bis 37** entlang dem Schweller.

Die Konstruktion erlaubt das Anbringen beliebiger Haltekloben **15.1** an der mit Türscharnieren versehenen Säule.

Folgende Ausführungsformen in **Fig.** 3, 4, 14 bis 18 zeigen den Verbund aller hintereinanderliegenden Fahrzeugtüren mit dem Dach **17**, der Fahrgastzelle **20** und der mit den gegenüberliegenden Schwellern **18** kraftschlüssig verbundenen Bodengruppe und den zugehörigen Säulen beim Aufprall mittels einwandfreiem Aneinanderkeilen der Haltekloben **15.1 bis 15.5a, 30 bis 37** mit Haltelöchern und/oder der Halteklammern **15.6** mit dem Verstärkungsrohr **17.1d**:

- Haltekloben **15.1**, mit der an einem Verstärkungselement der mit L-Profil versehenen A-Säule verschraubt, mit seinem Längsloch als Halteaussparung an dem Fensterführungsteil **6.1a**. Diese A-Säule wird mit dem entlang dem Dach verlaufenden Verstärkungsblech **17.1c** und dem Querträger **17.2d** der gegenüberliegenden A-Säulen beider Fahrzeugseiten zusammmgeschweißt. Diese Konstruktion ist für das Fensterführungsteil **6.2a, 6.1aB, 6.2aB** in Verbindung mit der B- oder C-Säule ebenso anwendbar.
- Haltekloben **15.2a,** mit dem Block **6.11** des Fensterführungsteiles **6.1a** verschraubt, mit seinem Längsloch als Halteaussparung des entlang dem Dach verlaufenden Verstärkungsbleches **17.1**. Dieses Blech wird mit der Verstärkungsplatte **17.2a**, der mit L-Profil versehenen A-Säule, und mit den Querträgern **17.2, 17.2b** der beiden A-Säulen zusammengeschweißt. Aus Kostengründen kann die Verstärkungsplatte **17.2a** zugleich die Aufgabe als Querträger bei Verzicht auf **17.2, 17.2b** übernehmen. Diese beiden Konstruktionen sind für das Fensterführungsteil **6.2a, 6.1aB, 6.2aB** in Verbindung mit der B-oder C-Säule ebenso anwendbar.
- Haltekloben **15.2**, mit dem Fensterführungsteil **6.2a** verschraubt, mit dem Halteloch des entlang dem Dach verlaufenden Verstärkungsbleches **17.1a**. Die gleiche Konstruktion ist für das Aneinanderkeilen des an dem Fensterführungsteil **6.1a, 6.1aB, 6.2aB** verschraubten Halteklobens **15.2** mit dem Halteloch ebenso anwendbar.
- Haltekloben **15.3** und Haltekloben **15.3a**, mit den Schenkein des U-Blockes **17.3** verschraubt, mit ihren Längslöchern als Halteaussparungen der Fensterführungsteile **6.2a, 6.1aB**. Als Verbindungselement zwischen der B-Säule und dem Dach wird der U-Block in der B-Säule mit dem entlang dem Dach verlaufenden Verstärkungsblech **17.1b** und dem Querträger **17.2c** der gegenüberliegenden B-Säulen beider Fahrzeugseiten zusammengeschweißt.
- Haltekloben **15.4**, mit der Verstärkungsplatte des entlang dem Schweller verlaufenden Verstärkungsbleches **18.1** verschraubt, mit dem Halteloch des Fensterführungsteiles **6.1a**. Diese Konstruktion ist für die Fensterführungsteile **6.2a, 6.1aB, 6.2aB** ebenso anwendbar.
- Haltekloben **15.4a** aus Niete z.B. nach DIN660, an der Verstärkungsplatte des entlang dem Schweller verlaufenden Verstärkungsbleches **18.1a** befestigt, mit dem Halteloch des Fensterführungsteiles **6.2a**. Haltekloben **15.2a** in x-y Wirkebene als Ersatz für Haltekloben **15.4, 15.4a** oder **15.8**.
- Haltekloben **15.5** und Haltekloben **15.5a**, mit den Schenkein des U-Blockes **18.3** verschraubt, mit ihren Längslöchern als Halteaussparungen der Fensterführungsteile **6.2a, 6.1aB**. Als Verbindungselement zwischen der B-Säule und der Bodengruppe wird der U-Block in der B-Säule mit dem entlang der Bodengruppe verlaufenden Verstärkungsblech **18.1b** und dem Querträger **18.2** der B-Säulen zusammengeschweißt. In dem U-Block **18.3** läßt sich das Gurtgehäuse **26** unterbringen.
- Halteklammern **15.6**, mit den Fensterführungsteilen **6.1a, 6.2a, 6.1aB, 6.2aB** verschraubt, mit dem entlang dem Dach oder Schweller verlaufenden Verstärkungsrohr **17.1d** in **Fig.** 4. Dieses Rohr wird mit den Querträgern **17.2e, 17.2f, 17.2g** der beiden A-, B- und C-Säulen verschweißt.
- Haltekloben **30, 32, 35, 37**, mit den jeweiligen Verstärkungselementen **21.3, 21.5, 21.3B, 21.5B** der schwellerseitigen Umfangskanten der Fahrgastzelle **20** in **Fig.** 14 bis 18 verschraubt, mit den korrespondierenden Haltelöchern der Hilfsteile **6.5, 6.5B**, welche an den zugehörigen Fensterführungsteilen **6, 6B** und den zugehörigen Hilfsteilen **6.6b, 6.7b, 6.8, 6.9** (nicht gezeichnet wegen der Ähnlichkeit mit **6.7b**) fest angebracht sind.
- Haltekloben **30, 32, 35, 37**, mit den jeweiligen Verstärkungselementen **21.1, 21.4, 21.1B, 21.4B** der dachseitigen Umfangskanten der Fahrgastzelle **20** verschraubt, mit den korrespondierenden Haltelöchern der Hilfsteile **6.5, 6.5B**, welche an den zugehörigen Fensterführungsteilen **6, 6B** fest angebracht sind.
- Haltekloben **30, 35**, mit den jeweiligen Verstärkungselementen **21.2, 21.2B** der türmittigen, säulenseitigen Umfangskanten der Fahrgastzelle **20** verschraubt, mit den korrespondierenden Haltelöchern der Hilfsteile **6.5, 6.5B**, welche an den zugehörigen Fensterführungsteilen **6, 6B** und den zugehörigen Aufprallbalken **1, 1B** fest angebracht sind.

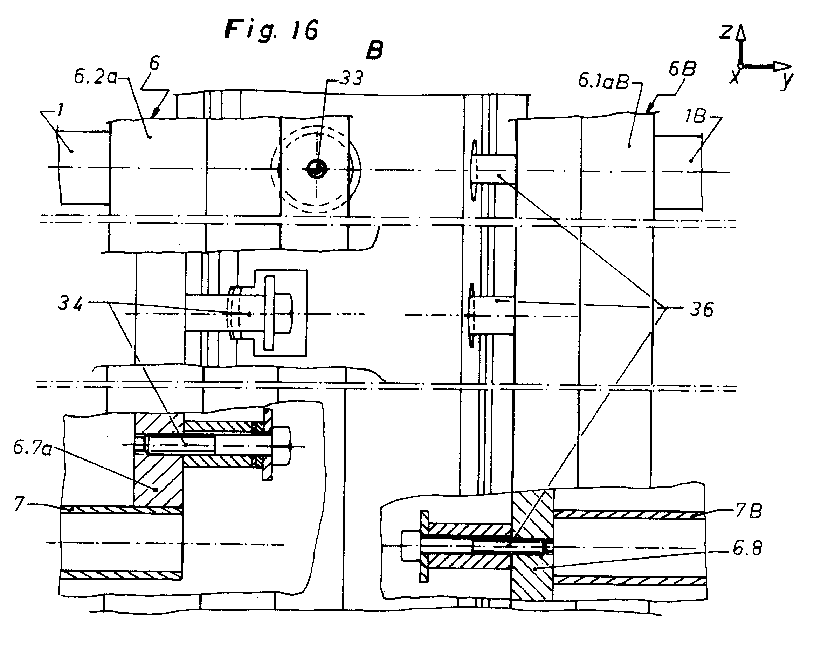

- Haltekloben **31**, mit dem Hilfsteil **6.6a** des Fensterführungsteiles **6** verschraubt, mit ihren Haltelöchern der verstärkten A-Säule in **Fig.** 14 bis 16.
- Haltekloben **36**, mit dem Hilfsteil **6.8** des Fensterführungsteiles **6B** verschraubt, mit den zugehörigen Haltelöchern der durch Verstärkungselement **23** versteiften B-Säule.
- Haltekloben **33**, mit dem Fensterführungsteil **6** verschraubt, mit den zugehörigen Haltelöchern der verstärkten B-Säule. In Analogie sind die Haltekloben **33** am Fensterführungsteil **6B** und die zugehörigen Haltelöcher an der verstärkten C-Säule anbringbar. Als Teil des Halteklobens **33** dient die radial verzahnte Stirnfläche der Unterlegscheibe **15.13** in **Fig.** 16 zu besserem Verkrallen in die Innenfläche der verstärkten B-Säule bei beliebigem Aufprall. Als fester Bestandteil einer Schraube nach DIN 931 Form Z ist die Unterlegscheibe beim Einsatz unverlierbar.
- Haltekloben **34**, mit dem Hilfsteil **6.7a** des Fensterführungsteiles **6** verschraubt, mit den zugehörigen Haltelöchern der verstärkten B-Säule. In Analogie sind die Haltekloben **34** am Hilfsteil **6.9** des Fensterführungsteiles **6B** und die zugehörigen Haltelöcher an der verstärkten C-Säule anbringbar.

An den Schenkeln des U-Blockes **17.3, 18.3** läßt sich mehr als ein Paar Haltekloben **15.3, 15.5** anbringen. An den ausgebauten Umfangskanten der Fahrgastzelle **20** mit den gestrichelt gezeichneten Linien "a1", "b1", "b2" und "c1" in **Fig.** 18 sind mehrere Haltekloben **30, 32, 35, 37** mit gleichen Merkmalen anbringbar.

Bei Anwendung des Assoziativgesetzes für die Anordnung jedes Halterungspaares ist das Anbringen des Halteklobens oder -loches sowohl an dem Fensterführungsteil oder Tragelement als auch an dem Verstärkungsblech als auch an dem U-Block konstruktiv möglich.

Zwecks Verschraubung der Haltekloben liegt die an dem Verstärkungsblech fest angebrachte Verstärkungsplatte bereichsweise an der Halteaussparung bzw. an dem Halteloch. Spielt Mehrgewicht bei schweren Fahrzeugen überhaupt keine große Rolle, so empfiehlt sich der Einsatz von Balken oder Balkenstab als Ersatz für das Verstärkungsblech in Frage. Zur Kostensenkung lassen sich mechanische Verbindungselemente wie Unterlegscheibe DIN125, Zylinderschraube DIN912 usw. verwenden. Bei dem Haltekloben **15.4a** handelt es sich um eine Niete z.B. nach DIN660. Jeder Haltekloben **15.1 bis 15.5a, 30 bis 37** mit der Ausnahme von **15.4a** besteht aus einer Schraube **15.14**, einer Hülse **15.11**, einem aus mehreren Unterlegscheiben zusammengestellten Distanzring **15.12** und einer mit größerem Außendurchmesser versehenen Unterlegscheibe **15.13** in **Fig.** 3A, 14 bis 18.

Aus der fehlenden Möglichkeit zur Einstellung der Toleranzen resultiert der große Toleranzbereich, weshalb sich der preiswerteste Haltekloben **15.4a** nur in Verbindung mit anderen einstellbaren Haltekloben **15.1 bis 15.8, 30 bis 37** zwecks Sicherstellen des Aneinanderkeilens eignet. Für äußerst einwandfreies Aneinanderkeilen bei Kostenminimierung durch ganz wenige Halterungspaare ist jedoch der Einsatz der Haltekloben **15.1 bis 15.8, 30 bis 37** ohne Haltekloben **15.4a** unabdingbar.

Zwecks formschlüssiger Verbindung und einwandfreiem Aneinanderkeilen zwischen Haltekloben & -loch muß ein kleiner Toleranzbereich in **Fig.** 3A, 14 bis 18 eingehalten werden. Die Anpassung der Toleranzen erfolgt über

- Entfernen oder Hinzufügen einiger Unterlegscheiben zur Bildung eines neuen Distanzringes mit Länge von 1 und/oder
- Einbauen einer Hülse mit Außendurchmesser d, Unterlegscheibe mit Außendurchmesser D und/oder eines Distanzringes mit Durchmesser $d_R$ nach Suchen aus den mit verschiedenem Durchmesser bereits fertiggestellten Hülsen, Unterlegscheiben und/oder Distanzringen.

Jede Halteklammer **15.6** in **Fig.** 4 und 4A besteht aus einer Klammer **15.20** mit einem Innendurchmesser $d_1$ und einer Spaltbreite $s_1$ kleiner als $d_1$, einer Schraube **15.21**, einem aus mehreren Unterlegscheiben zusammengestellten Distanzring **15.22**, einem Federring **15.24** und einer Mutter **15.25**. Aus **Fig.** 4A sind $s_1$, $d_1$ und $d_2$ ersichtlich. Zwecks einwandfreiem Aneinanderkeilen zwischen der Halteklammer und dem Verstärkungsrohr **17.1d** mit einem Außendurchmesser $d_2$ kleiner als $s_1$ muß ein kleiner Toleranzbereich in **Fig.** 4A eingehalten werden. Die Anpassung der Toleranzen erfolgt über

- Einbauen einer Halteklammer mit $s_1$ nach Suchen aus den mit verschiedener Spaltbreite bereits fertiggestellten Halteklammern
- Einbauen eines Verstärkungsrohres mit $d_2$ nach Suchen aus den mit verschiedenem Außendurchmesser bereits fertiggestellten Verstärkungsrohre,
- Versetzen des Mittelpunktes des Klammerloches vom Mittelpunkt des Verstärkungsrohres und/oder
- Entfernen oder Hinzufügen einiger Unterlegscheiben zur Bildung eines neuen Distanzringes mit Dicke von $1_1$.

Literatur aus der Automobilindustrie:

[1] 53-page report of 2nd version "A million injuries and $ billion loss per year due to failure of prior art and insufficient R&D work" by Go
[2] Polizeilicher Unfallbericht vom 31.07.96 und Wiesbadener Tagblatt vom 01.08.96
[3] Polizeilicher Unfallbericht vom 27.11.94
[4] Der sicherste, über 140000 DM teure, deutsche Sportwagen
[5] FAZ vom 10.10 und ARD vom 09.10.97
[6] Problematik der Auslegung von Schraubendruckfedern unter Berücksichtigung des Abwälzverhaltens (Go, Automobil-Industrie 3/82, S.359-367)
[7] Zum Schwingungsverhalten von Schraubendruckfedern (Go, ATZ 84 (1982), S.223-226)
[8] Auto Motor and Sport 18/1996 S. 28 "Neue Qualität in der Optik: 3.5 mm breite Spalte" durch VW Vorstandsvor. Dr. -Ing. Ferdinand Piëch.
[9] Heft "Fahrzeugsicherheit 90" des Institutes für Fahrzeugsicherheit aus GDV
[10] Stellungnahmen des Institutes für Fahrzeugsicherheit vom 17.02 und 16.03.95
[11] ADAC 9/95
[12] ADAC 10/96
[13] Stellungnahme eines Direktoren der NHSTA vom 24.11.98 auf [1]

**Patentansprüche**

1. Fahrzeugtür mit einem Türfachwerk bestehend aus

 - mindestens zwei Aufprallbalken (**1, 7, 1B, 7B**) und
 - mindestens einem Fensterführungsteil (**6, 6B, 6.1, 6.2, 6.1B, 6.2B, 6.1a, 6.2a, 6.1aB, 6.2aB**) zur Führung und Aufnahme einer Fensterscheibe,
   wobei

   * folgende Halterungspaare, bestehend aus Haltelöchern & Haltekloben (**15.1 bis 15.5a, 15.7, 15.8, 30 bis 37**) und Halteklammern (**15.6**) & Verstärkungsrohr (**17.1d**), jeweils mit einer Einstellvorrichtung zur Einstellung der Mindestspiele oder zulässigen Toleranzen versehen sind; ausgenommen ist das Halterungsteil (**15.4a**), und
   * das Fahrzeug mit folgendem Verbundpaar aus Fahrzeugtür (**8, 8B, 8T, 8h, 8x**) & Fahrzeugteil , bestehend aus Fahrzeugtür & Dach (**17**), Fahrzeugtür & Schweller (**18**), Fahrzeugtür & Säule(n), Fahrzeugtür (**8**) & Fahrzeugtür (**8B**) und Fahrzeugtür & Umlaufskante (**21, 21T, 21h, 21x**) der Fahrgastzelle (**20**), ausgestattet ist;

   **dadurch gekennzeichnet**, daß aus

   a) einer Anzahl von Halterungsteilen, welche am Dach (**17**) sowie Schweller (**18**) angeordnet sind, und
   b) den zugehörigen Halterungsteilen, welche am Fensterführungsteil angeordnet sind, die *einstellbaren Halterungspaare* Haltelöcher & Haltekloben (**15.2, 15.2a, 15.4, 15.7, 15.8**) gebildet sind,
   c) welche durch Einstellung auf die Mindestspiele mittels der Einstellvorrichtung beim Türschließen miteinander formschlüssig verbunden sind,
   d) zwecks einwandfreiem Aneinanderkeilen im Verformungszustand bei realem beliebigem Aufprall und Ineinanderverkrallen infolge Zunahme der Aufprallenergie, mit der Folge, daß alle Fahrzeugtüren

 - zum Schutz der Insassen vor Herausschleudern aus dem Unfallfahrzeug und/oder vor Intrusion der Fahrzeugteile immer verriegelt und
 - mit dem Dach (**17**) sowie Schweller (**18**) der Bodengruppe zur Spannungsverringerung durch Erhöhung der Struktursteifigkeit und Verteilung der Aufprallenergie verbunden sind.

2. Fahrzeugtür nach Anspruch 1, gekennzeichnet durch Anordnung der Halterungspaare eines Verbundpaares Fahrzeugtür & Fahrzeugteil in mindestens zwei Wirkebenen.

3. Fahrzeugtür nach mindestens einem der vorgenannten Ansprüche, gekennzeichnet durch Anordnung

a) des Halterungsteiles am Dach **(17)** und

b) mehrerer Halterungsteile am dachseitigen Fensterführungsteil zur Bildung eines einstellbaren Halterungspaares Verstärkungsrohr **(17.1d)** & mehrerer Halteklammern **(15.6)**.

4. Fahrzeugtür nach mindestens einem der vorgenannten Ansprüche, gekennzeichnet durch Anordnung

a) des Halterungsteiles am Schweller **(18)** und

b) mehrerer Halterungsteile am schwellerseitigen Fensterführungsteil zur Bildung des einstellbaren Halterungspaares Verstärkungsrohr **(17.1d)** & mehrerer Halteklammern **(15.6)**.

5. Fahrzeugtür nach Anspruch 2, gekennzeichnet durch Anordnung

a) einer Anzahl von Halterungsteilen an einer mit einem Bolzen **(298)** eines Türschlosses **(248)** versehenen Säule und

b) der zugehörigen Halterungsteile am jener Säule benachbarten Fensterführungsteil der mit dem anderen Teil jenes Türschlosses versehenen Fahrzeugtür **(8, 8B)**
zur Bildung der einstellbaren Halterungspaare Haltelöcher & Haltekloben **(33, 34)** in zwei Wirkebenen.

6. Fahrzeugtür nach mindestens einem der vorgenannten Ansprüche, gekennzeichnet durch Anordnung

a) mindestens eines Paares Halterungsteile an beiden Schenkeln eines U-Blockes **(17.3, 18.3)** in der gemeinsamen Säule der nebeneinanderliegenden Fahrzeugtüren **(8, 8B)** und

b) der zugehörigen Halterungsteile an beiden Fensterführungsteilen jener Fahrzeugtüren zur Bildung zweier einstellbarer Halterungspaare Haltelöcher & Haltekloben **(15.3, 15.3a, 15.5, 15.5a)**.

7. Fahrzeugtür nach Anspruch 6, dadurch gekennzeichnet, daß der U-Block **(17.3)** Fahrzeugtüren, Säule und Fahrzeugseiten miteinander verbindet, wobei er

- in formschlüssiger Verbindung mit Halterungsteilen **(15.3, 15.3a)** der nebeneinanderliegenden Fahrzeugtüren und

- in kraftschlüssiger Verbindung mit der gemeinsamen Säule jener Fahrzeugtüren, einem entlang dem Dach verlaufenden Verstärkungsblech **(17.1b)** und einem Querträger **(17.2c)** der gegenüberliegenden gemeinsamen Säulen beider Fahrzeugseiten ist.

8. Fahrzeugtür nach mindestens einem der Ansprüche 6 und 7, dadurch gekennzeichnet, daß der U-Block **(18.3)** Fahrzeugtüren, Säule und Fahrzeugseiten miteinander verbindet, wobei er

- in formschlüssiger Verbindung mit Halterungsteilen **(15.5, 15.5a)** der nebeneinanderliegenden Fahrzeugtüren und

- in kraftschlüssiger Verbindung mit der gemeinsamen Säule jener Fahrzeugtüren, einem entlang dem Schweller verlaufenden Verstärkungsblech **(18.1b)** und einem Querträger **(18.2)** der gegenüberliegenden gemeinsamen Säulen beider Fahrzeugseiten ist.

9. Fahrzeugtür nach Anspruch 2, gekennzeichnet durch Anordnung

a) einer Anzahl von Halterungsteilen der Halterungspaare an einer Säule, woran die Fahrzeugtür drehbar gelagert ist, und

b) der zugehörigen Halterungsteile am jener Säule benachbarten Fensterführungsteil jener Fahrzeugtür
zur Bildung der einstellbaren Halterungspaare Haltelöcher & Haltekloben **(15.1, 31, 36)** in drei Wirkebenen.

10. Fahrzeugtür nach mindestens einem der vorgenannten Ansprüche, gekennzeichnet durch Anordnung

a) einer Anzahl von Halterungsteilen der Halterungspaare an einer Fahrgastzelle **(20)** und

b) der zugehörigen Halterungsteile am Fensterführungsteil
zur Bildung der einstellbaren Halterungspaare Haltelöcher & Haltekloben **(30, 32, 35, 37)**.

11. Fahrzeugtür nach Anspruch 8, dadurch gekennzeichnet, daß ein Gurtgehäuse **(26)** im U-Block **(18.3)** unterbringbar ist.

**12.** Fahrzeugtür nach mindestens einem der vorgenannten Ansprüche, gekennzeichnet durch Verwendung eines einzigen, festigkeitsmäßig hohen U-Profil Fensterführungsteiles **(6, 6B)**, dessen beide Enden einem unteren Fahrzeugteil und dessen oberes Teil einem oberen Fahrzeugteil gegenüberstehen, zwecks Aufnahme der zugehörigen Halterungsteile.

**13.** Fahrzeugtür nach Anspruch 12, dadurch gekennzeichnet, daß beide Enden des festigkeitsmäßig hohen U-Profil Fensterführungsteiles **(6, 6B)** miteinander durch ein Fensterführungsteil **(6.4, 6.4B)** kraftschlüssig verbunden sind.

**14.** Fahrzeugtür nach mindestens einem der Ansprüche 1 bis 11, gekennzeichnet durch Verwendung zweier festigkeitsmäßig hoher Fensterführungsteile **(6.1a, 6.2a, 6.1aB, 6.2aB)** und den zugehörigen Fensterführungsschienen **(6.1, 6.2, 6.1B, 6.2B)**.

**15.** Fahrzeugtür nach mindestens einem der Ansprüche 1 bis 11, gekennzeichnet durch Verwendung eines festigkeitsmäßig hohen Fensterführungsteiles **(6, 6B)** und zweier Fensterführungsschienen.

**16.** Fahrzeugtür nach mindestens einem der Ansprüche 1 bis 11, dadurch gekennzeichnet, daß das für die Halterungsteile vorgesehene Dach durch eine Verstärkungsplatte, ein Verstärkungselement und einen Querträger der gegenüberliegenden Säulen beider Fahrzeugseiten verstärkt wird.

**17.** Fahrzeugtür nach mindestens einem der vorgenannten Ansprüche, dadurch gekennzeichnet, daß das Halterungsteil bestehend aus mechanischen Verbindungselementen wie Schraube, Niete, Unterlegscheiben, Muttern, Stift, Sicherungsringen, -scheiben usw. sowie

- einer Halteklammer **(15.6)** mit Innendurchmesser $d_1$ und Spaltbreite $s_1$ *oder*
- einer Hülse **(15.11)** des Halteklobens und einer Unterlegscheibe **(15.13)** mit Durchmesser D, mit einer konstruktiven Einstellmöglichkeit von außen zur Einhaltung der Toleranzen zwischen dem Halterungsteil und dem zugehörigen Halterungsteil ausgestattet ist.

**18.** Fahrzeugtür nach Anspruch 17, dadurch gekennzeichnet, daß die Unterlegscheibe **(15.13)** mit einer radial verzahnten Stirnfläche versehen ist.

**19.** Fahrzeugtür nach mindestens einem der Ansprüche 17 und 18, dadurch gekennzeichnet, daß die Unterlegscheibe ein fester Bestandteil der Schraube ist.

**20.** Fahrzeugtür nach mindestens einem der Ansprüche 17 bis 19, dadurch gekennzeichnet, daß die Hülse **(15.11)** des Halteklobens mit Außendurchmesser d der Bedingung $D \geq d \geq d_R$ unterliegt, wobei D der Außendurchmesser der Unterlegscheibe **(15.13)** und $d_R$ der Durchmesser des aus mehreren Unterlegscheiben zusammengestellten Distanzringes **(15.12)** ist.

**21.** Fahrzeugtür nach mindestens einem der vorgenannten Ansprüche, dadurch gekennzeichnet, daß das Halterungspaar

- ein an dem Fensterführungsteil **(6.1a, 6.2a, 6.1aB, 6.2aB)** angeordnetes Halteloch und
- einen an einer Verstärkungsplatte der Säule fest angebrachten Haltekloben **(15.1)** umfaßt, wobei an jener Säule der Querträger **(17.2d)** sowie das entlang dem Dach oder Schweller verlaufende Verstärkungsblech **(17.1c)** fest angebracht sind.

**22.** Fahrzeugtür nach mindestens einem der vorgenannten Ansprüche, dadurch gekennzeichnet, daß das Halterungspaar

- einen an einem Block **(6.11)** des Fensterführungsteiles **(6.1a, 6.2a, 6.3, 6.4, 6.1aB, 6.2aB, 6.3B, 6.4B)** fest angebrachten Haltekloben **(15.2a)** und
- ein an dem entlang dem Dach oder Schweller verlaufenden Verstärkungsblech **(17.1)** angeordnetes Halteloch umfaßt, wobei dieses Verstärkungsblech **(17.1)** an der Säule und an

  \* der Verstärkungsplatte **(17.2a)** sowie den Querträgern **(17.2, 17.2b)** *oder*
  \* der Verstärkungsplatte **(17.2a)** fest angebracht ist.

23. Fahrzeugtür nach mindestens einem der vorgenannten Ansprüche, dadurch gekennzeichnet, daß das Halterungspaar

- ein am entlang dem Dach oder Schweller verlaufenden Verstärkungsblech (17.1a, 18.1, 18.1a) angeordnetes Halteloch und
- einen am Fensterführungsteil (6.1a, 6.2a, 6.3, 6.4 oder 6.1aB, 6.2aB, 6.3B, 6.4B) fest angebrachten Haltekloben (15.2, 15.4, 15.4a) umfaßt.

24. Fahrzeugtür nach mindestens einem der vorgenannten Ansprüche, dadurch gekennzeichnet, daß das Verbundpaar Fahrzeugtür & Fahrzeugteil, welches Dach oder Schweller ist, mit einem Halterungspaar versehen ist, bestehend aus

- dem entlang dem Fahrzeugteil verlaufendes Verstärkungsrohr (17.1d), das an zwei Querträgern (17.2e, 17.2f oder 17.2f, 17.2g) fest angebracht ist, und
- mindestens zwei Halteklammern (15.6), die an den Fensterführungsteilen (6.1a, 6.2a, 6.3, 6.4 oder 6.1aB, 6.2aB, 6.3B, 6.4B) fest angebracht sind.

25. Fahrzeugtür nach mindestens einem der vorgenannten Ansprüche, dadurch gekennzeichnet, daß das Verbundpaar Fahrzeugtür & Fahrzeugteil, welches Dach oder Schweller ist, mit einem Halterungspaar versehen ist, bestehend aus

- dem entlang dem Fahrzeugteil verlaufendes Verstärkungsrohr (17.1d), das an den Querträgern (17.2e, 17.2f, 17.2g) fest angebracht ist, und
- mindestens vier Halteklammern (15.6), die an den Fensterführungsteilen (6.1a, 6.2a, 6.3, 6.4 oder 6.1aB, 6.2aB, 6.3B, 6.4B) fest angebracht sind.

26. Fahrzeugtür nach mindestens einem der vorgenannten Ansprüche, dadurch gekennzeichnet, daß das Halterungspaar

- ein Halteloch des Hilfsteiles (6.5, 6.5B), welches an dem Fensterführungsteil (6, 6B) fest angebracht ist, und
- einen Haltekloben (30, 32, 35), welcher an dem Verstärkungselement (21.1, 21.4, 21.1B) der dachseitigen Umfangskante (21) der Fahrgastzelle (20) fest angebracht ist, umfaßt.

27. Fahrzeugtür nach mindestens einem der vorgenannten Ansprüche, dadurch gekennzeichnet, daß das Halterungspaar

- einen Haltekloben (30, 35), welcher an dem Verstärkungselement (21.2, 21.2B) der säulenseitigen Umfangskante der Fahrgastzelle (20) fest angebracht ist, und
- ein Halteloch des Hilfsteiles (6.5, 6.5B), welches an dem Fensterführungsteil (6, 6B) und Aufprallbalken (1, 1B) fest angebracht ist, umfaßt.

28. Fahrzeugtür nach mindestens einem der vorgenannten Ansprüche, dadurch gekennzeichnet, daß das Halterungspaar

- einen Haltekloben (30, 32, 35), welcher an dem Verstärkungselement (21.3, 21.5, 21.3B) der schwellerseitigen Umfangskante der Fahrgastzelle (20) fest angebracht ist, und
- ein Halteloch des Hilfsteiles (6.5, 6.5B), welches an dem Fensterführungsteil (6, 6B) und Hilfsteil (6.6b, 6.7b, 6.8) fest angebracht ist, umfaßt.

29. Fahrzeugtür nach mindestens einem der vorgenannten Ansprüche, gekennzeichnet dadurch, daß ein dem Türumriß angepaßtes Hilfsteil (6.5C) an dem Fensterführungsteil (6B) sowie dem Aufprallbalken (1B, 7B) angeordnet ist.

30. Fahrzeugtür nach mindestens einem der vorgenannten Ansprüche, dadurch gekennzeichnet, daß das Halterungspaar

- einen Haltekloben (37), welcher an dem Verstärkungselement (21.4B, 21.6B, 21.5B) der säulenseitigen Umfangskante der Fahrgastzelle (20) fest angebracht ist, und
- ein Halteloch des türumrißförmigen Hilfsteiles (6.5C) umfaßt.

**31.** Fahrzeugtür nach mindestens einem der vorgenannten Ansprüche, dadurch gekennzeichnet, daß das Halterungspaar

- einen Haltekloben **(31, 36)**, welcher am Hilfsteil **(6.6a, 6.8)** des Fensterführungsteiles **(6, 6B)** fest angebracht ist, und
- ein Halteloch der durch Verstärkungselement **(23)** versteiften, jenem Fensterführungsteil benachbarten Säule umfaßt.

**32.** Fahrzeugtür nach mindestens einem der vorgenannten Ansprüche, dadurch gekennzeichnet, daß das Halterungspaar

- einen am Fensterführungsteil **(6, 6B)** fest angebrachten Haltekloben **(33)** und
- ein Halteloch der durch Verstärkungselement **(23)** versteiften, mit dem Bolzen **(298)** des Türschlosses **(248)** versehenen, jenem Fensterführungsteil benachbarten Säule umfaßt.

**33.** Fahrzeugtür nach mindestens einem der vorgenannten Ansprüche, dadurch gekennzeichnet, daß das Halterungspaar

- einen am Hilfsteil **(6.7a)** des Fensterführungsteiles **(6, 6B)** fest angebrachten Haltekloben **(34)** und
- ein Halteloch der durch Verstärkungselement **(23)** versteiften, mit einem Teil des Türschlosses versehenen, jenem Fensterführungsteil benachbarten Säule umfaßt.

**34.** Fahrzeugtür nach mindestens einem der vorgenannten Ansprüche, dadurch gekennzeichnet, daß die Hecktür **(8T)**, die Fronthaube **(8h)**, die Schiebetür, die Ladedoppeltür oder der Kofferaumdeckel **(8x)** die gleichen Merkmale wie die Fahrzeugtür aufweist.

**35.** Fahrzeugtür nach mindestens einem der vorgenannten Ansprüche, gekennzeichnet durch Verwendung von Metallen, Verbundmaterialien, glasfaserverstärkten oder nichtmetallischen Werkstoffen für das Material des Halteklobens, Fensterführungsteiles, Tragelementes, Hilfsteiles, Verstärkungsrohres, Verstärkungselementes, U-Blocks und der Halteklammer.

## Claims

**1.** A door for a passenger car or truck equipped with a door frame comprising

- at least two impact beams **(1, 7, 1B, 7B)** and
- at least one window-guide element **(6, 6B, 6.1, 6.2, 6.1B, 6.2B, 6.1a, 6.2a, 6.1aB, 6.2aB)** to guide and receive a window pane,

where

* the following interlocking assemblies such as engaging holes & engaging keys **(15.1 to 15.5a, 15.7, 15.8, 30 to 37)** and engaging hooks **(15.6)** & reinforcing rod **(17.1d)**, with the exception of engaging member **(15.4a)**, are equipped with adjusting device to adjust to permissible tolerances or clearances and
* the vehicle is equipped with the following compound assemblies such as vehicle door & vehicle roof **(17)**, vehicle door & side rail **(18)**, vehicle door & post section(s), vehicle door **(8)** & vehicle door **(8B)** and vehicle door & transition region **(21, 21T, 21h, 21x)** of passenger compartment **(20)**,

wherein the *adjustable interlocking assemblies* such as engaging holes & engaging keys **(15.2, 15.2a, 15.4, 15.7, 15.8)** are defined by

a) a number of engaging members arranged to vehicle roof **(17)** and side rail **(18)** and
b) the engaging mating members arranged to the window-guide element, wherein
c) *the interlocking assemblies* are in form-locking connection, when vehicle door is closed, by the adjusting device to adjust to the permissible tolerances
d) for the purpose of perfect interengagement in the state of deformation in the event of real arbitrary collision and interlocking due to the increase of impact energy, so that all vehicle doors are

- always interlocked to protect passengers against ejection from the passenger compartment and/or intrusion of a deformed vehicle member and
- connected to vehicle roof **(17)** and side rail **(18)** of the vehicle frame to lower stress due to the increase of structural stiffness and the energy distribution.

2. A door according to claim 1, characterized by arrangement of interlocking assemblies of a compound assembly: vehicle door & vehicle member in at least two operating planes.

3. A door according to at least one of preceding claims, characterized by arrangement of

a) the engaging member to vehicle roof **(17)**
b) several engaging mating members to the upper part of the window-guide element and to define the adjustable interlocking assemblies: reinforcing rod **(17.1d)** & several engaging hooks **(15.6)**.

4. A door according to at least one of preceding claims, characterized by arrangement of

a) the engaging member to side rail **(18)**
b) several engaging mating members to the upper part of the window-guide element and to define the adjustable interlocking assemblies: reinforcing rod **(17.1d)** & several engaging hooks **(15.6)**.

5. A door according to claim 2, characterized by arrangement of

a) a number of the engaging members to a post section having a part of door lock and
b) the engaging mating members to the window-guide element of vehicle door **(8, 8B)** adjacent to the post section to define the adjustable interlocking assemblies: engaging holes & engaging keys **(33, 34)** in two operating planes.

6. A door engaging according to at least one of preceding claims, characterized by arrangement of

a) at least one pair of the engaging members to both legs of U-shaped housing **(17.3, 18.3)** in the common post section of vehicle doors **(8, 8B)** in juxtaposition and
b) the engaging mating members to both window-guide elements of the vehicle doors. to define the adjustable interlocking assemblies: engaging holes & engaging keys **(15.3, 15.3a, 15.5, 15.5a)**.

7. A door according to claim 6, wherein the U-shaped housing **(17.3)**, connecting the vehicle doors, post section and vehicle sides, is

- in force-locking connection with engaging members **(15.3, 15.3a)** of the vehicle doors in juxtaposition and
- in force-locking connection with the common post section of the vehicle doors, reinforcing panel **(17.1b)** arranged along the vehicle roof and transverse girder **(17.2c)** of the common post sections of both vehicle sides facing each other.

8. A door according to at least one of claims 6 and 7, wherein the U-shaped housing **(18.3)**, connecting the vehicle doors, post section and vehicle sides, is

- in force-locking connection with engaging members **(15.5, 15.5a)** of the vehicle doors in juxtaposition and
- in force-locking connection with the common post section of the vehicle doors, reinforcing panel **(18.1b)** arranged along the side rail and transverse girder **(18.2)** of the common post sections of both vehicle sides facing each other.

9. A door according to claim 2, characterized by arrangement of

a) a number of the engaging members of interlocking assemblies to a post section, whereto the vehicle door is pivotally attached, and
b) the engaging mating members to the window-guide element of the vehicle door adjacent to the post section. to define the adjustable interlocking assemblies: engaging holes & engaging keys **(15.1, 31, 36)** in three operating planes.

10. A door according to at least one of preceding claims, characterized by arrangement of

> a) a number of the engaging members of interlocking assemblies to the passenger compartment **(20)**, and
> b) the engaging mating members to the window-guide element to define the adjustable interlocking assemblies: engaging holes & engaging keys **(30, 32, 35, 37)**.

11. A door according to claim 8, wherein a belt case **(26)** is accommodated in U-shaped housing **(18.3)**.

12. A door according to at least one of preceding claims, characterized by use of one stiff U-shaped window-guide element **(6, 6B)**, both ends of which face the lower vehicle member and upper part of which faces the upper vehicle member for the purpose of accommodating their respective engaging members.

13. A door according to claim 12, wherein both ends of stiff U-shaped window-guide element **(6, 6B)** are force-locking connected with each other by window-guide element **(6.4, 6.4B)**.

14. A door according to at least one of claims 1 to 11, characterized by use of two stiff window-guide elements **(6.1a, 6.2a, 6.1aB, 6.2aB)** and the respective window guides **(6.1, 6.2, 6.1B, 6.2B)**.

15. A door according to at least one of claims 1 to 11, characterized by use of one stiff window-guide element **(6, 6B)** and two window guides.

16. A door according to at least one of claims 1 to 11, wherein the vehicle roof accommodating the engaging members, is reinforced by a reinforcing plate, reinforcing element and transverse girder of the post sections of both vehicle sides facing each other.

17. A door according to at least one of preceding claims, wherein the engaging member comprising mechanical connection elements such as screw, rivet, washer, nut, pin, engaging rings etc. and

> - an engaging hook **(15.6)** with interior diameter $d_1$ and gap $s_1$ _or_
> - a sleeve **(15.11)** of engaging key and a washer **(15.13)** with outer diameter D, is provided with the adjusting device to adjust the tolerances between that engaging member and the engaging mating member from outside the vehicle.

18. A door according to claim 17, wherein the front region of washer **(15.13)** has radial teeth.

19. A door according to at least one of claims 17 and 18, wherein the washer is an integral part of a screw.

20. A door according to at least one of claims 17 to 19, wherein the sleeve **(15.11)** of engaging member with exterior diameter d is governed by the condition $D \geq d \geq d_R$, where D is the exterior diameter of washer **(15.13)** and $d_R$ is the diameter of spacer **(15.12)**.

21. A door according to at least one of preceding claims, wherein the interlocking assembly comprises

> - an engaging hole arranged in window-guide element **(6.1a, 6.2a, 6.1aB, 6.2aB)** and
> - an engaging key **(15.1)** rigidly attached to a reinforcing plate of the post section, whereto the transverse girder **(17.2d)** and reinforcing panel **(17.1c)** arranged along the vehicle roof or side rail are rigidly attached.

22. A door according to at least one of preceding claims, wherein the interlocking assembly comprises

> - an engaging key **(15.2a)** rigidly attached to block **(6.11)** of window-guide element **(6.1a, 6.2a, 6.3, 6.4, 6.1aB, 6.2aB, 6.3B, 6.4B)** and
> - an engaging hole arranged in reinforcing panel **(17.1)** arranged along the vehicle roof or side rail, where the reinforcing panel **(17.1)** is rigidly attached to the post section and

> > * to reinforcing plate **(17.2a)** and transverse girders **(17.2, 17.2b)** _or_
> > * to reinforcing plate **(17.2a)**.

23. A door according to at least one of preceding claims, wherein the interlocking assembly comprises

- an engaging hole arranged in reinforcing panel **(17.1a, 18.1, 18.1a)** arranged along the vehicle roof or side rail and
- an engaging key **(15.2, 15.4, 15.4a)** fixed to window-guide element **(6.1a, 6.2a, 6.3, 6.4, 6.1aB, 6.2aB, 6.3B, 6.4B)**.

24. A door according to at least one of preceding claims, wherein the compound assembly: vehicle door & vehicle member, which is vehicle roof or side rail, is provided with an interlocking assembly, in which

- a reinforcing rod **(17.1d)** arranged along the vehicle member is fixed to two transverse girders **(17.2e, 17.2f or 17.2f, 17.2g)** and
- at least two engaging hooks **(15.6)** are fixed to window-guide elements **(6.1a, 6.2a, 6.3, 6.4 or 6.1aB, 6.2aB, 6.3B, 6.4B)**.

25. A door according to at least one of preceding claims, wherein the compound assembly: juxtaposed vehicle doors & vehicle member, which is vehicle roof or side rail, is provided with an interlocking assembly, in which

- a reinforcing rod **(17.1d)** arranged along the vehicle member is fixed to transverse girders **(17.2e, 17.2f, 17.2g)** and
- at least four engaging hooks **(15.6)** are fixed to window-guide elements **(6.1a, 6.2a, 6.3, 6.4, 6.1aB, 6.2aB, 6.3B, 6.4B)**.

26. A door according to at least one of preceding claims, wherein the interlocking assembly comprises

- an engaging hole arranged in auxiliary part **(6.5, 6.5B)** fixed to window-guide element **(6, 6B)** and
- an engaging key **(30, 32, 35)** fixed to reinforcing element **(21.1, 21.4, 21.1B)** of the top transition region **(21)** of passenger compartment **(20)**.

27. A door according to at least one of preceding claims, wherein the interlocking assembly comprises

- an engaging key **(30, 35)** fixed to reinforcing element **(21.2, 21.2B)** of the post-section-transition region of passenger compartment **(20)** and
- an engaging hole arranged in auxiliary part **(6.5, 6.5B)** fixed to window-guide element **(6, 6B)** and impact beam **(1, 1B)**.

28. A door according to at least one of preceding claims, wherein the interlocking assembly comprises

- an engaging key **(30, 32, 35)** fixed to reinforcing element **(21.3, 21.5, 21.3B)** of the bottom transition region of passenger compartment **(20)** and
- an engaging hole arranged in auxiliary part **(6.5, 6.5B)** fixed to window-guide element **(6, 6B)** and auxiliary part **(6.6b, 6.7b, 6.8)**.

29. A door according to at least one of preceding claims, wherein an auxiliary part **(6.5C)**, adapted to the outer door-contour, is arranged to the outer door-contour to window-guide element **(6B)** and impact beams **(1B, 7B)**.

30. A door according to at least one of preceding claims, wherein the interlocking assembly comprises

- an engaging key **(37)** rigidly attached to reinforcing element **(21.4B, 21.6B, 21.5B)** of the post-section-transition region of passenger compartment **(20)** and
- an engaging hole arranged in outer door-contour-shaped auxiliary part **(6.5C)**.

31. A door according to at least one of preceding claims, wherein the interlocking assembly comprises

- an engaging key **(31, 36)** rigidly attached to auxiliary part **(6.6a, 6.8)** of window-guide element **(6, 6B)** and
- an engaging hole arranged in the post section reinforced by reinforcing element **(23)** and adjacent to the window-guide element.

32. A door according to at least one of preceding claims, wherein the interlocking assembly comprises

- an engaging key **(33)** rigidly attached to window-guide element **(6, 6B)** and
- an engaging hole arranged in the post section reinforced by element **(23)**, provided with a stud **(298)** of door lock **(248)** and adjacent to the window-guide element.

33. A door according to at least one of preceding claims, wherein the interlocking assembly comprises

- an engaging key **(34)** rigidly attached to auxiliary part **(6.7a)** of window-guide element **(6, 6B)** and
- an engaging hole arranged in the post section reinforced by reinforcing element **(23)**, provided with a part of door lock and adjacent to the window-guide element.

34. A door according to at least one of preceding claims, wherein a tailgate door **(8T)**, hood **(8h)**, sliding side-, cargo door or trunk cover **(8x)** has the same features as the vehicle door.

35. A door according to at least one of preceding claims, characterised by use of metal, compound material, glass fibre reinforced material or non-metal material for material of the engaging member, window-guide element, auxiliary part, reinforcing element and U-shaped housing.

**Revendications**

1. Porte de véhicule à charpentes, comprenant :

- au moins une charpente d'absorption de choc **(1, 7, 1B, 7B)** ; et :
- au moins une pièce de guidage **(6, 6B, 6.1, 6.2, 6.1B, 6.2B, 6.1a, 6.2a, 6.1aB, 6.2aB)** servant à guider et loger une glace :

* les ensembles de retenue suivants, comprenant les trous et gonds de retenue **(15.1 à 15.5a, 15.7, 15.8, 30 à 37)** ainsi que les étriers de retenue **(15.6)** et un tuyau de renforcement **(17.1d)**, étant munis chacun, à l'exception de la pièce de retenue **(15.4a)**, d'un dispositif de réglage de la tolérance minimum ;
* le véhicule étant également muni d'un module formé de la liaison de la porte **(8, 8B, 8T, 8h, 8x)** et d'un autre composant du véhicule, tel porte + toit **(17)** porte + seuil de plancher **(18)**, porte + montant(s), porte **(8)** + porte **(8B)** et porte + bord de contour **(21, 21T, 21h, 21x)** de l'habitacle **(20)**:

**caractérisée en ce que**

a) plusieurs pièces de retenue ménagées sur le toit **(17)** et sur le seuil du plancher **(18)** ainsi que :
b) les pièces de retenue associées ménagées sur le guidage de glace forment des *ensembles de retenue réglables* comprenant des trous et gonds de retenue **(15.2, 15.2a, 15.4, 15.7, 15.8)**,
c) ces ensembles étant reliés en conjugaison de forme à la fermeture de la porte, et ce grâce à un réglage à une tolérance minimum qui se fait à l'aide d'un dispositif de réglage ;
d) en cas de déformation à la suite d'un choc réel quelconque, ces ensembles s'aboutent parfaitement jusqu'à assurer un parfait enchevêtrement dans la mesure où l'énergie générée par le choc augmente ; suite à cela, toutes les portes du véhicule

- sont en permanence verrouillées, protégeant ainsi les occupants contre les intrusions de composants et évitant qu'ils ne soient éjectés du véhicule,
- sont reliées au toit **(17)** et au seuil **(18)** du plancher, réduisant ainsi la tension et augmentant la rigidité de la structure et assurant une répartition de l'énergie générée par le choc.

2. Porte de véhicule selon la revendication 1 ci-devant, caractérisée en ce que les ensembles de retenue d'un module formé de la liaison entre la porte et un autre composant du véhicule sont ménagés dans au moins deux plans de travail.

3. Porte de véhicule selon au moins une des revendications ci-devant, caractérisée en ce que

a) la pièce de retenue est montée sur le toit **(17)** et
b) en ce que plusieurs pièces de retenue sont disposées sur le guidage de glace du côté du toit, formant ainsi un ensemble de retenue réglable formé par un tuyau de renforcement **(17.1d)** et plusieurs étriers de retenue **(15.6)**.

4. Porte de véhicule selon au moins une des revendications ci-devant, caractérisée en ce que

    a) la pièce de retenue est ménagée sur le seuil du plancher **(18)** et
    b) en ce que plusieurs pièces de retenue sont disposées sur le guidage de glace du côté du seuil du plancher, formant ainsi un ensemble de retenue réglable formé par un tuyau de renforcement **(17.1d)** et plusieurs étriers de retenue **(15.6)**.

5. Porte de véhicule selon la revendication 2 ci-devant, caractérisée en ce que

    a) plusieurs pièces de retenue sont ménagées sur un montant équipé d'un boulon **(298)** d'une serrure de porte **(248)** ; et :
    b) les pièces de retenue associées sont ménagées sur le guidage de glace de l'autre porte **(8, 8B)** munie de la partie associée de la serrure qui est contigu au montant, de manière à ce que les ensembles réglables formés par les trous et gonds de retenue **(33, 34)** forment deux plans de travail.

6. Porte de véhicule selon au moins une des revendications ci-devant, caractérisée en ce que

    a) au moins un des ensembles des pièces de retenue est ménagé sur les deux branches d'un bloc en U **(17.3,18.3)** dans le montant commun des portes voisines **(8, 8B)** du véhicule et
    b) en ce que les pièces de retenue associées sont ménagées sur les deux guidages de glace desdites portes, formant ainsi deux ensembles de retenue réglables formés de trous et de gonds de retenue **(15.3, 15.3a, 15.5, 15.5a)**.

7. Porte de véhicule selon la revendication 6 ci-devant, caractérisée en ce que le bloc en U **(17.3)** relie les portes du véhicule, le montant et les côtés du véhicule entre eux,

    - et ce en conjugaison de forme avec les pièces de retenue **(15.3, 15.3a)** des portes juxtaposées du véhicule,
    - ainsi qu'en conjugaison de force avec le montant commun desdites portes, une tôle de renforcement **(17.1b)** montée autour du toit et une poutre transversale **(17.2c)** des montants communs opposés des deux côtés du véhicule.

8. Porte de véhicule selon au moins une des revendications 6 et 7 ci-devant, caractérisée en ce que le bloc en U **(18.3)** relie les portes, le montant et les côtés du véhicule entre eux,

    - et ce en conjugaison de forme avec les pièces de retenue **(15.5, 15.5a)** des portes juxtaposées du véhicule,
    - ainsi qu'en conjugaison de force avec le montant commun desdites portes, une tôle de renforcement **(18.1b)** montée le long du seuil et une poutre transversale **(18.2)** des montants communs opposés des deux côtés du véhicule.

9. Porte de véhicule selon la revendication 2 ci-devant, caractérisée en ce que

    a) plusieurs pièces de retenue des ensembles de retenue sont ménagées sur un montant sur lequel la porte du véhicule est logée orientable.
    b) et en ce que les pièces de retenue associées sont ménagées sur le guidage de glace juxtaposé au montant de ladite porte, de manière à ce que les ensembles de retenue réglables formés de trous et de gonds de retenue **(15.1, 31, 36)** forment trois plans de travail.

10. Porte de véhicule selon au moins une des revendications ci-devant, caractérisée en ce que

    a) plusieurs pièces de retenue des ensembles de retenue sont ménagées sur l'habitacle **(20)** et
    b) en ce que les pièces de retenue associées sont ménagées sur le guidage de glace, formant ainsi les ensembles de retenue réglables formés des trous et gonds de retenue **(30, 32, 35, 37)**.

11. Porte de véhicule selon la revendication 8 ci-devant, caractérisée en ce qu'un boîtier de ceinture **(26)** peut être logé dans le bloc en U **(18.3)**.

12. Porte de véhicule selon au moins une des revendications ci-devant, caractérisée en ce que le guidage de glace **(6, 6B)** est formé par un profilé en U à haute résistance dont les extrémités sont opposées à un composant inférieur du véhicule et dont la partie supérieure est opposée à un composant supérieur dit véhicule pour y loger les pièces de retenue correspondantes.

13. Porte de véhicule selon la revendication 12, caractérisée en ce que les deux extrémités du profilé en U de guidage de glace **(6, 6B)** sont reliées entre elles par un guidage de glace **(6.4, 6.4B)** en conjugaison de force.

14. Porte de véhicule selon au moins une des revendications 1 à 11, caractérisée en ce que deux guidages de glace à haute résistance **(6.1a, 6.2a, 6.1aB, 6.2aB)** et des glissières de glace correspondantes **(6.1, 6.2, 6.1B, 6.2B)** sont utilisés.

15. Porte de véhicule selon au moins une des revendications 1 à 11, caractérisée en ce qu'un guidage de glace à haute résistance **(6, 6B)** et deux glissières de glace correspondantes sont utilisés.

16. Porte de véhicule selon au moins une des revendications 1 à 11, caractérisée en ce que le toit prévu pour recevoir les pièces de retenue est renforcé par une plaque de renforcement, un élément de renforcement et une poutre transversale des montants opposés des deux côtés du véhicule.

17. Porte de véhicule selon ait moins une des revendications ci-devant, caractérisée en ce que la pièce de retenue comprend des éléments mécaniques de liaisons, tels des vis, boulons, rondelles, écrous, goupilles, circlips, disques de butée..., ainsi que :

- un étrier de retenue **(15.6)** à diamètre intérieur $d_1$ et une largeur de fente $s_1$ <u>ou :</u>
- une douille **(15.11)** du gond de retenue et une rondelle **(15.13)** à diamètre D, qui, de par la construction, sont munis de dispositifs d'ajustage extérieurs permettant de respecter les tolérances entre la pièce de retenue et la pièce associée.

18. Porte de véhicule selon la revendication 17 ci-devant, caractérisée en ce que la rondelle **(15.13)** est munie d'une face dentée.

19. Porte de véhicule selon au moins une des revendications 17 et 18 ci-devant, caractérisée en ce que la rondelle fait partie intégrante de la vis.

20. Porte de véhicule selon au moins une des revendications 17 à 19 ci-devant, caractérisée en ce que la douille **(15.11)** dit gond de retenue à diamètre extérieur d est soumise à la condition $D \geq d \geq d_R$, D étant le diamètre extérieur de la rondelle **(15.13)** et $d_R$ étant le diamètre de la bague d'écartement **(15.12)** formée par plusieurs rondelles.

21. Porte de véhicule selon au moins une des revendications ci-devant, caractérisée en ce que l'ensemble de retenue comprend

- un trou de retenue menagé sur le guidage de glace **(6.1a, 6.2a, 6.1aB, 6.2aB)** et
- un gond de maintien **(15.1)** monté fixe sur une plaque de renforcement du montant; sur ledit montant étant montés fixes la poutre transversale **(17.2d)** et la tôle de renforcement **(17.1c)** montée le long du seuil du plancher ou du toit.

22. Porte de véhicule selon au moins une des revendications ci-devant, caractérisée en ce que l'ensemble de retenue comprend

- un gond de retenue **(15.2a)** monté fixe sur un bloc **(6.11)** du guidage de glace **(6.1a, 6.2a, 6.3, 6.4, 6.1aB, 6.2aB, 6.3B, 6.4B)** et
- un trou de retenue ménagé sur la tôle de renforcement **(17.1)** montée le long du toit ou du seuil du plancher ; ladite tôle de renforcement **(17.1)** est montée fixe sur le montant et

  * sur la plaque de renforcement **(17.2a)** ainsi que sur les poutres transversales **(17.2, 17.2b)** <u>ou</u>
  * sur la plaque de renforcement **(17.2a)**.

23. Porte de véhicule selon au moins une des revendications ci-devant, caractérisée en ce que l'ensemble de retenue comprend

- un trou de retenue ménagé sur la tôle de renforcement **(17.1a, 18.1, 18.1a)** montée le long du toit ou du seuil du plancher et
- un gond de retenue **(15.2, 15.4, 15.4a)** monté fixe sur un guidage de glace **(6.1a, 6.2a, 6.3, 6.4** ou **6.1aB, 6.2aB, 6.3B, 6.4B)**.

24. Porte de véhicule selon au moins une des revendications ci-devant, caractérisée en ce que l'ensemble formé par la porte et un autre composant du véhicule, ledit composant étant le toit ou le seul du plancher, est équipé d'un ensemble de retenue

   - dont le tuyau de renforcement **(17.1d)** monté le long dudit composant est monté fixe sur deux poutres transversales **(17.2e, 17.2f** ou **17.2f, 17.2g)** et
   - dont au moins deux étriers de retenue **(15.6)** sont montés fixes sur les guidages de glace **(6.1a, 6.2a, 6.3, 6.4** ou **6.1aB, 6.2aB, 6.3B, 6.4B)**.

25. Porte de véhicule selon au moins une des revendications ci-devant, caractérisée en ce que l'ensemble formé par les portes juxtaposées et un autre composant du véhicule, ledit composant étant le toit ou le seuil du plancher, est muni d'un ensemble de retenue

   - dont le tuyau de renforcement **(17.1d)** monté le long dudit composant est monté fixe sur les poutres transversales **(17.2e, 17.2f, 17.2g)**, et
   - dont au moins quatre étriers de retenue **(15.6)** sont montés fixes sur les guidages de glace **(6.1a, 6.2a, 6.3, 6.4, 6.1aB, 6.2aB, 6.3B, 6.4B)**.

26. Porte de véhicule selon au moins une des revendications ci-devant, caractérisée en ce que l'ensemble de retenue comprend

   - un trou de retenue de l'accessoire **(6.5, 6.5B)** ménagé fixe sur le guidage de glace **(6, 6B)** et
   - un gond de retenue **(30, 32, 35)** monté fixe sur l'élément de renforcement **(21.1, 21.4, 21.1B)** dit bord extérieur **(21)** de l'habitacle **(20)** dit côté du toit.

27. Porte de véhicule selon au moins une des revendications ci-devant, caractérisée en ce que l'ensemble de retenue comprend

   - un gond de retenue **(30, 35)** monté fixe sur l'élément de renforcement **(21.2, 21.2B)** du bord extérieur de l'habitacle **(20)** du côté du montant, et
   - un trou de retenue d'un accessoire **(6.5, 6.5B)** ménagé fixe sur le guidage de glace **(6, 6B)** et la charpente d'absorption du choc **(1, 1B)**.

28. Porte de véhicule selon au moins une des revendications ci-devant, caractérisée en ce que l'ensemble de retenue comprend

   - un gond de retenue **(30, 32, 35)** monté fixe sur l'élément de renforcement **(21.3, 21.5, 21.3B)** du bord extérieur de l'habitacle **(20)** du côté du seuil du plancher et
   - un trou de retenue de l'accessoire **(6.5, 6.5B)** monté fixe sur le guidage de glace **(6, 6B)** et l'accessoire **(6.6b, 6.7b, 6.8)**.

29. Porte de véhicule selon au moins une des revendications ci-devant, caractérisée en ce qu'une pièce accessoire **(6.5C)** est adaptée au contour de la porte et ménagée sur le guidage de glace **(6B)** et sur la charpente d'absorption du choc **(1B, 7B)**.

30. Porte de véhicule selon au moins une des revendications ci-devant, caractérisée en ce que l'ensemble de retenue comprend

   - un gond de retenue **(37)** monté fixe sur l'élément de renforcement **(21.4B, 21.6B, 21.5B)** du bord extérieur de l'habitacle **(20)** du côté du montant et
   - un trou de retenue de la pièce accessoire **(6.5C)** dont la forme correspond au contour de la porte.

31. Porte de véhicule selon au moins une des revendications ci-devant, caractérisée en ce que l'ensemble de retenue comprend

- un gond de retenue **(31, 36)** monté fixe sur l'accessoire **(6.6a, 6.8)** du guidage de glace **(6, 6B)** ist, et
- un trou de retenue du montant juxtaposé audit guidage de glace, le montant étant stabilisé par un élément de renforcement **(23)**.

**32.** Porte de véhicule selon au moins une des revendications ci-devant, caractérisée en ce que l'ensemble de retenue comprend

- un gond de retenue **(33)** monté fixe sur un guidage de glace **(6, 6B)** et
- un trou de retenue du montant juxtaposé audit guidage de glace, stabilisé par un élément de renforcement **(23)** et muni du boulon **(298)** de la serrure de porte **(248)**.

**33.** Porte de véhicule selon au moins une des revendications ci-devant, caractérisée en ce que l'ensemble de retenue comprend

- un gond de retenue **(34)** monté fixe sur l'accessoire **(6.7a)** du guidage de glace **(6, 6B)** et
- un trou de retenue du montant juxtaposé audit guidage de glace, stabilisé par un élément de renforcement **(23)** et muni d'une partie de la serrure de la porte.

**34.** Porte de véhicule selon au moins une des revendications ci-devant, caractérisée en ce que la porte arrière **(8T)**, le capot avant **(8h)**, la porte coulissante, les deux abattants de chargement ou le capot du coffre **(8x)** ont les mêmes caractéristiques que la porte du véhicule.

**35.** Porte de véhicule selon au moins une des revendications ci-devant, caractérisée en ce que le gond de retenue, le guidage de glace, l'élément de support, la pièce accessoire, le tuyau de renforcement, l'élément de renforcement, le bloc en U et l'étrier de retenue sont fabriqués en métal, en matériaux composites, en matériaux renforcés en fibres optiques ou en matériaux non-métalliques.

Fig. 1B

Prior Art / Stand der Technik

Fig. 1A

Fig. 1

Fig. 2

Fig. 2A

EP 0 869 878 B1

# Fig. 3

Fig.4

Fig.4A

Fig. 3A

EP 0 869 878 B1

Prior Art / Stand der Technik

**Fig. 5**

**Fig. 6**

**Fig. 7**

**Fig. 8**

**Fig. 10**

**Fig. 9**

Prior Art / Stand der Technik

*Fig. 10 A*

## Prior Art / Stand der Technik

### Fig. 11

### Fig. 12

**Fig. 13**

U1  U2  U3  U4

F1  F2  α  22

Prior Art / Stand der Technik

**Fig. 14**

Fig. 15

Fig. 16

Fig. 17

Fig. 18